(19) Europäisches Patentamt / European Patent Office / Office européen des brevets

(11) **EP 4 410 746 A1**

(12) **EUROPEAN PATENT APPLICATION**

(43) Date of publication:
**07.08.2024 Bulletin 2024/32**

(21) Application number: **24154127.5**

(22) Date of filing: **26.01.2024**

(51) International Patent Classification (IPC):
**C01G 53/00** (2006.01)   **H01M 4/00** (2006.01)

(52) Cooperative Patent Classification (CPC):
**C01G 53/42; H01M 4/00;** C01P 2004/80

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.01.2023 KR 20230013011**

(71) Applicant: **Samsung SDI Co., Ltd.**
**Yongin-si, Gyeonggi-do 17084 (KR)**

(72) Inventors:
• **KANG, Byungwuk**
  **17084 Yongin-si (KR)**
• **YOU, Yongchan**
  **17084 Yongin-si (KR)**
• **LEE, Jangwook**
  **17084 Yongin-si (KR)**
• **CHOI, Seungyeon**
  **17084 Yongin-si (KR)**
• **KIM, Soohyeon**
  **17084 Yongin-si (KR)**

(74) Representative: **Marks & Clerk LLP**
**15 Fetter Lane**
**London EC4A 1BW (GB)**

(54) **POSITIVE ELECTRODE ACTIVE MATERIAL FOR LITHIUM SECONDARY BATTERY, METHOD OF PREPARING THE POSITIVE ELECTRODE ACTIVE MATERIAL, POSITIVE ELECTRODE FOR LITHIUM SECONDARY BATTERY INCLUDING THE POSITIVE ELECTRODE ACTIVE MATERIAL, AND LITHIUM SECONDARY BATTERY**

(57) Provided are a positive electrode active material for a lithium secondary battery, a method of preparing the positive electrode active material, and a lithium secondary battery including a positive electrode that includes the positive electrode active material, wherein the positive electrode active material includes large crystal secondary particles of a nickel-based lithium metal oxide which include a plurality of primary particles, wherein the large crystal secondary particles have a hollow structure having pores therein, the primary particles have a size of about 1 $\mu$m to about 4 $\mu$m, the large crystal secondary particles have a size of about 10 $\mu$m to about 18 $\mu$m, the positive electrode active material comprises a coating layer containing a cobalt compound which is on surfaces of the large crystal secondary particles of the nickel-based lithium metal oxide, and the large crystal secondary particles of the nickel-based lithium metal oxide are doped with molybdenum.

FIG. 1A

SDI 5.0kV 11.6mm x5.00k SE(M,LA10)   10.0um

**Description**

**BACKGROUND**

**1. Field**

One or more embodiments of the present disclosure relate to a positive electrode active material for a lithium secondary battery, a method of preparing the positive electrode active material, a positive electrode for a lithium secondary battery, including the positive electrode active material, and a lithium secondary battery.

**2. Description of the Related Art**

With the development of portable electronic devices, communication devices, and the like, there is a high desire to develop lithium secondary batteries having high energy density. However, the safety of lithium secondary batteries having high energy density may deteriorate, and thus improvement in this regard is desirable.

In order to manufacture lithium secondary batteries having a long lifetime and allowing gas to be reduced, the use of single crystal positive electrode active materials as positive electrode active materials for lithium secondary batteries has been studied. Single crystal positive electrode active materials have problems wherein particle aggregation occurs and/or productivity decreases due to heat treatment at a high temperature for single crystallization.

If single crystal positive electrode active materials are used, a pulverization process is performed to address particle aggregation of the single crystal positive electrode active materials. However, if such a pulverization process is performed in this way, the crystallinity of positive electrode active materials is lowered, surface defects are generated, and residual pulverized products are generated as impurities, and thus improvement in this regard is desirable.

**SUMMARY**

One or more embodiments of the present disclosure include a positive electrode active material for a lithium secondary battery in which aggregation of particles is suppressed or reduced and a cation mixing ratio is reduced.

One or more embodiments include a method of preparing the above-described positive electrode active material.

One or more embodiments include a positive electrode including the positive electrode active material.

One or more embodiments include a lithium secondary battery including the positive electrode.

Additional aspects of embodiments will be set forth in part in the description which follows and, in part, will be apparent from the description, or may be learned by practice of the presented embodiments of the disclosure.

According to an aspect of embodiments, provided is a positive electrode active material for a lithium secondary battery including:

large crystal secondary particles of a nickel-based lithium metal oxide which include a plurality of primary particles, wherein the large crystal secondary particles have a hollow structure having pores therein,
the primary particles have a size of about 1 $\mu$m to about 4 $\mu$m,
the large crystal secondary particles have a size of about 10 $\mu$m to about 18 $\mu$m,
the positive electrode active material further includes a coating layer containing a cobalt compound which is on surfaces of the large crystal secondary particles of the nickel-based lithium metal oxide, and the large crystal secondary particles of the nickel-based lithium metal oxide are doped with molybdenum.

A content of molybdenum may be in a range of about 0.1 mol% to about 1.0 mol% with respect to a total content of 100 mol% of metals other than lithium in the positive electrode active material.

At least one selected from surfaces and grain boundaries of the plurality of primary particles may include the coating layer containing the cobalt compound.

A content of the cobalt compound in the coating layer containing the cobalt compound may be in a range of about 0.1 mol% to about 5.0 mol% with respect to a total content of the positive electrode active material. The coating layer containing the cobalt compound may have a thickness of about 1 nm to about 50 nm.

In the coating layer containing the cobalt compound, the cobalt compound may be (e.g. may include) cobalt oxide, lithium cobalt oxide, or a combination thereof. The coating layer containing the cobalt compound may further include at least one selected from boron, manganese, phosphorus, aluminium, zinc, zirconium, and titanium.

The pores inside the positive electrode active material may have a size of about 2 $\mu$m to about 7 $\mu$m. The nickel-based lithium metal oxide may be a compound represented by Formula 1 below.

$$\text{Formula 1} \qquad Li_a(Ni_{1-x-y}M_xM2_y)O_{2\pm\alpha1}$$

In Formula 1, M1 may be at least one element selected from Co, Mn, and Al,

M2 may be at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr),
$0.95 \leq a \leq 1.1$, $0.6 \leq (1-x-y) < 1$, $0 \leq x < 0.4$, $0 \leq y < 0.4$, $0 \leq \alpha_1 \leq 0.1$, and a case in which x and y are 0 at the same time may be excluded.

The nickel-based lithium metal oxide may be a compound represented by Formula 2 below.

$$\text{Formula 2} \qquad \text{Li}_a(\text{Ni}_{1-x-y-z}\text{Co}_x\text{M3}_y\text{M4}_z)\text{O}_{2 \pm \alpha 1}$$

In Formula 2, M3 may be at least one element selected from Mn and Al,

M4 may be at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr),
$0.95 \leq a \leq 1.1$, $0.6 \leq (1-x-y-z) < 1$, $0 \leq x < 0.4$, $0 \leq y < 0.4$, $0 \leq z < 0.4$, $0 \leq \alpha \leq 0.1$, and a case in which x, y, and z are 0 at the same time may be excluded.

The primary particles may have a size of about 2 $\mu$m to about 4 $\mu$m, and the secondary particles may have a size of about 12 $\mu$m to about 18 $\mu$m.
A peak intensity ratio ($I_{(003)}I_{(104)}$) of the positive electrode active material measured through X-ray diffraction analysis may be in a range of about 1.2 to about 4.0, and an area ratio ($A_{(003)}/A_{(104)}$) may be in a range of about 1.1 to about 1.4.
The large crystal secondary particles may include one or two single crystal primary particle layers.
According to another aspect of embodiments, provided is a method of preparing a positive electrode active material for a lithium secondary battery, the method including mixing together a nickel precursor, at least one metal precursor selected from a precursor (M1) and a precursor (M2), and a basic solution to obtain a mixture, performing a co-precipitation reaction on the mixture, and then drying the mixture to obtain a nickel-based metal precursor having pores therein,

obtaining a mixture of the nickel-based metal precursor having the pores therein and a lithium precursor,
adding a molybdenum precursor to the mixture and performing primary heat treatment on an obtained mixture,
performing a disintegration process on a product subjected to the primary heat treatment, and
adding a cobalt precursor to the product to obtain a mixture and performing secondary heat treatment on the mixture to prepare the positive electrode active material,
wherein the primary heat treatment is performed at a higher temperature than the secondary heat treatment,
the precursor (M1) is at least one selected from a cobalt precursor, a manganese precursor, and an aluminium precursor, and
the precursor (M2) is a precursor including at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr).

A pore region inside the nickel-based metal precursor may have a size of about 2 $\mu$m to about 7 $\mu$m. The cobalt precursor may be (e.g. may include) a $\text{Co(OH)}_2$, CoOOH, CoO, $\text{Co}_2\text{O}_3$, $\text{Co}_3\text{O}_4$, $\text{Co(OCOCH}_3)_2 \cdot 4\text{H}_2\text{O}$, $\text{CoCl}_2$, $\text{Co(NO}_3)_2 \cdot 6\text{H}_2\text{O}$, $\text{CoSO}_4$, $\text{Co(SO}_4)_2 \cdot 7\text{H}_2\text{O}$, or combination thereof. Here, the size of the pore region inside the nickel-based metal precursor is measured using a scanning electron microscope (SEM), as shown in Evaluation Example 1. If the pore size is spherical, it represents the average particle diameter, and if the pore size is non-spherical, it represents the average major axis length.
The nickel-based metal precursor may be a compound represented by Formula 3, a compound represented by Formula 4, or a combination thereof.

$$\text{Formula 3} \qquad (\text{Ni}_{1-x-y}\text{M1}_x\text{M2}_y)(\text{OH})_2$$

In Formula 3, M1 may be at least one element selected from Co, Mn, and Al,

M2 may be at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr),

EP 4 410 746 A1

0.6≤(1-x-y)<1, 0≤x<0.4, 0≤y<0.4, and a case in which x and y are 0 at the same time may be excluded.

$$\text{Formula 4} \qquad (Ni_{1-x-y}M1_xM2_y)O$$

In Formula 4, M1 may be at least one element selected from Co, Mn, and Al,

M2 may be at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr),
0.6≤(1-x-y)<1, 0≤x<0.4, 0≤y<0.4, and a case in which x and y are 0 at the same time may be excluded.

The nickel-based metal precursor may be a compound represented by Formula 5, a compound represented by Formula 6, or a combination thereof.

$$\text{Formula 5} \qquad Ni_{1-x-y-z}Co_xM3_yM4_z(OH)_2$$

In Formula 5, M3 may be at least one element selected from Mn and Al,

M4 may be at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr),
0.6≤(1-x-y-z)<1, 0≤x<0.4, 0≤y<0.4, 0≤z<0.4, and a case in which x, y, and z are 0 at the same time may be excluded.

$$\text{Formula 6} \qquad (Ni_{1-x-y-z}C_{Ox}M3_yM4_z)O$$

In Formula 6, M3 may be at least one element selected from Mn and Al,

M4 may be at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr),
0.6≤(1-x-y-z)<1, 0≤x<0.4, 0≤y<0.4, 0≤z<0.4, and a case in which x, y, and z are 0 at the same time may be excluded.

The nickel-based metal precursor and the lithium precursor may be mixed together such that a molar ratio (Li/Me, wherein Me is a metal other than Li) may be about 0.9 or more and less than about 1.1. The lithium precursor may be lithium hydroxide, lithium carbonate, lithium sulfate, lithium nitrate, or a combination thereof.

The primary heat treatment may be performed at a temperature of about 800 °C to about 1,200 °C in an oxidizing gas atmosphere, and the secondary heat treatment may be performed at a temperature of about 600 °C to about 850 °C in an oxidizing gas atmosphere.

According to still another aspect of embodiments, provided is a positive electrode for a lithium secondary battery including a positive electrode current collector, and a positive electrode active material layer on the positive electrode current collector,
wherein the positive electrode active material layer includes the above-described positive electrode active material and at least one selected from single particles having a same composition as the positive electrode active material, and aggregates thereof.

The positive electrode active material may include pores having a size of about 0.5 μm to about 4 μm.

A surface portion of the positive electrode may include more single crystal single particles than a central portion adjacent to the positive electrode current collector.

The positive electrode may include a positive electrode active material layer and the positive electrode active material layer may comprise a center portion adjacent to the positive electrode current collector comprising a greater amount of the positive electrode active material, which has a hollow structure, than the surface portion. The positive electrode may include one or two positive electrode active material layers.

According to yet another aspect of embodiments, provided is a lithium secondary battery including the above-described positive electrode, a negative electrode, and an electrolyte interposed therebetween.

At least some of the above and other features of the invention are set out in the claims.

## BRIEF DESCRIPTION OF THE DRAWINGS

The above and other aspects and features of certain embodiments of the disclosure will be more apparent from the following description taken in conjunction with the accompanying drawings, in which:

FIG. 1A is a scanning electron microscope image of a cross section of a positive electrode active material prepared according to Example 1;

FIG. 1B schematically illustrates a structure of a hollow positive electrode active material having a one-layer structure, according to one embodiment;

FIG. 1C schematically illustrates a structure of a hollow positive electrode active material having a two-layer structure, according to an embodiment;

FIG. 2A is a scanning electron microscope image of a cross section of a positive electrode active material prepared according to Comparative Example 1;

FIG. 2B is a scanning electron microscope image of a cross section of a positive electrode active material prepared according to Comparative Example 2;

FIG. 2C is a scanning electron microscope image of a cross section of a positive electrode active material prepared according to Comparative Example 3;

FIG. 2D is a scanning electron microscope image of a cross section of a nickel-based metal precursor prepared according to Preparation Example 1;

FIG. 3A shows a state before pressing during preparation of a positive electrode prepared according to Manufacturing Example 1;

FIG. 3B shows a state after pressing during preparation of the positive electrode prepared according to Manufacturing Example 1;

FIG. 3C shows a state after pressing during preparation of a positive electrode prepared according to Comparative Manufacturing Example 1;

FIG. 4 is a schematic view of a lithium secondary battery according to one embodiment;

FIG. 5 shows a result of energy dispersive spectroscopy (EDS) for the positive electrode active material of Example 1 in which a concentration distribution of cobalt ions inside the positive electrode active material is measured through EDS; and

FIG. 6 is an image showing a result of energy dispersive spectroscopy (EDS) analysis of the positive electrode active material of Comparative Example 1 in which a concentration distribution of cobalt ions inside the positive electrode active material is measured.

## DETAILED DESCRIPTION

Reference will now be made in more detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of embodiments of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, a positive electrode active material for a lithium secondary battery, a method of preparing the positive electrode active material, a positive electrode including the positive electrode active material, and a lithium secondary battery including the positive electrode according to one embodiment will be described in more detail.

In order to manufacture a lithium secondary battery having improved life characteristics, a positive electrode including a single crystal positive electrode active material is used. During preparing, a single crystal positive electrode active material undergoes a process of performing high-temperature heat treatment by adding an excessive amount of lithium. Due to the high-temperature heat treatment, particles agglomerate, productivity decreases, and an amount of residual lithium increases. In some embodiments, if a lithium secondary battery is manufactured using such a single crystal positive electrode active material, capacity and charge/discharge efficiency are lowered.

A particle aggregation phenomenon occurs, and thus a single crystal positive electrode active material may undergo a pulverization process if a positive electrode is prepared. If such a pulverization process is performed, the single crystal characteristics of a positive electrode active material are deteriorated, residual pulverized products are generated, and surface resistance is high. Thus, improvement in this regard is desirable.

Accordingly, the inventors of the present disclosure have addressed the above-described phenomena and have completed a positive electrode active material of the present disclosure in which, because there is no (or substantially no) particle aggregation, a pulverization process is not required and surface resistance characteristics are improved.

A positive electrode active material for a lithium secondary battery according to one embodiment includes large crystal secondary particles of a nickel-based lithium metal oxide which include a plurality of primary particles.

The large crystal secondary particles have a hollow structure having pores therein.

The primary particles have a size of about 1 $\mu$m to about 4 $\mu$m, and the secondary particles have a size of about 10 $\mu$m to about 18 $\mu$m.

The positive electrode active material includes a coating layer containing a cobalt compound which is on surfaces of the large crystal secondary particles of the nickel-based lithium metal oxide.

The large crystal secondary particles of the nickel-based lithium metal oxide are doped with molybdenum.

As used herein, large crystal secondary particles include primary particles having a particle size of about 1 $\mu$m to about 4 $\mu$m and refer to an aggregate of a plurality of primary particles unlike single particles (e.g., one body, monolith, or monolithic particles). As used herein, a large crystal has charge/discharge efficiency and a capacity retention ratio that are similar to those of a single crystal but has good particle flowability to have excellent processability, thereby being easy to mass-production.

As used herein, "size" may be average size, if particles are spherical, "size" refers to an average particle diameter, and if particles are non-spherical, "size" refers to an average major axis length. A particle size may be measured using a scanning electron microscope (SEM). When measuring particle size using a scanning electron microscope or transmission electron microscope, it is determined as the average value of 30 or more randomly selected particles of 1 $\mu$m or larger, excluding fine particles.

The average particle diameter can be measured by methods well known to those skilled in the art, for example, using a particle size analyzer, a transmission electron microscope photograph, or a scanning electron microscope. It can also be measured with a photo (Electron Microscope).

The average particle diameter may refer to the average particle diameter (D50), which refers to the diameter of particles with a cumulative volume of 50% by volume in the particle size distribution.

Another method is to measure using a measuring device using dynamic light-scattering, perform data analysis, count the number of particles for each particle size range, and then calculate from this the average particle size (D50) value can be obtained. Alternatively, it can be measured using a laser diffraction method. When measuring by laser diffraction, more specifically, the particles to be measured are dispersed in a dispersion medium, then introduced into a commercially available laser diffraction particle size measurement device (for example, Microtrac MT 3000) and 60W of ultrasonic waves at about 28 kHz are applied. After examining the output of the average particle size (D50) based on 50% of the particle size distribution in the measuring device can be calculated.

If a positive electrode active material includes a coating layer containing a cobalt compound, surface resistance characteristics may be improved, thereby improving the life characteristics of a lithium secondary battery including a positive electrode using the same.

In the positive electrode active material according to one embodiment, the secondary particles may include one or two primary particle layers.

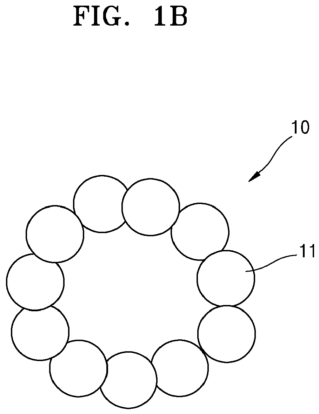

A positive electrode active material 10 according to one embodiment may include secondary particles and may include a hollow primary particle layer having a one-layer structure as shown in FIG. 1B. The hollow primary particle layer may include primary particles 11.

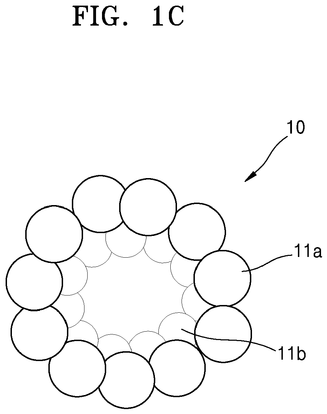

A positive electrode active material according to another embodiment may include a hollow primary particle layer having a two-layer structure as shown in FIG. 1C. Due to such a structure, a cracking process may be easily performed during pressing. In FIG. 1C, reference numerals 11a and 11b denote first primary particles and second primary particles which form a first primary particle layer as a first layer and a second primary particle layer as a second layer, respectively.

A positive electrode active material according to one embodiment has a cluster structure that is easily broken through pressing for preparing a positive electrode, and thus a pulverization process is not required. If such a positive electrode active material is used, it is possible to prepare a positive electrode having a form in which a conductive agent and a binder are consecutively connected in a positive electrode plate.

The positive electrode active material according to one embodiment may be partially broken during a pressing process to include a plurality of primary particles in addition to large crystal secondary particles.

In the positive electrode active material according to one embodiment, the primary particles have a size of about 1 $\mu$m to about 4 $\mu$m, for example, about 2 $\mu$m to about 4 $\mu$m, or about 2 $\mu$m to about 3.5 $\mu$m, and the large crystal secondary particles may have, for example, a size of about 12 $\mu$m to about 18 $\mu$m or about 12 $\mu$m to about 14 $\mu$m. A size of the pores inside the positive electrode active material may be in a range of about 2 $\mu$m to about 7 $\mu$m, about 2 $\mu$m to about 5 $\mu$m, or about 2.5 $\mu$m to about 4 $\mu$m. If the sizes of the primary particles, the large crystal secondary particles, and the pores inside the positive electrode active material are within the above ranges, it is possible to obtain a positive electrode active material having excellent capacity characteristics. In the present specification, a size of pores is mainly measured using a mercury intrusion method, a gas adsorption method, and/or a scanning electron microscope (SEM) method. The gas adsorption method may include a Brunauer-Emmett-Teller (BET) method and/or a Barrett-Joyner-Halenda (BJH) method. As used herein, a size of pores refers to an average pore size. In an embodiment of the disclosure, a size of pores is measured using the BET method. In a SEM method, a size of pores is evaluated using image analysis.

A suitable evaluation method using BET and/or BJH is disclosed in the workshop presentation file of Architectural Institute of Korea (2007-10), 4 pages from page 527 (Title: Changes in pore distribution and mechanical properties induced carbonation for PCM using nitrogen adsorption method) (https://www.auric.or.kr/User/Rdoc/DocRdoc.aspx?returnVal=rd_r&dn=214447#.Yvxss nZByM8).

As used herein, the term "inside" of a positive electrode active material refers to a region having 50 vol% to 70 vol% from a center, for example, 60 vol%, with respect to the total volume from the center to a surface of the positive electrode active material or refers to a remaining region except for a (peripheral) region within 3 μm from the outermost side of the positive electrode active material with respect to the total distance from the center to the surface of the positive electrode active material.

In the positive electrode active material according to one embodiment, a content of doped molybdenum may be in a range of about 0.1 mol% to about 1.0 mol%, 0.1 mol% to about 0.8 mol%, or about 0.1 mol% to about 0.5 mol% with respect to the total content of about 100 mol% of a metal (e.g. metals) other than lithium in the positive electrode active material. If the content of molybdenum is within the above range, it is possible to obtain a positive electrode active material having improved capacity and efficiency characteristics as well as improved life characteristics.

In the positive electrode active material according to one embodiment, a coating layer containing a cobalt compound may be included on at least one selected from surfaces and grain boundaries of the plurality of primary particles.

The coating layer containing the cobalt compound may be applied to cover the entirety or a portion of a surface of the positive electrode active material. For example, the coating layer may be applied to cover about 90% or less, about 80% or less, about 70% or less, about 50% or less, about 40% or less, about 30% or less, about 20% or less, about 10% or less, or about 1 % to about 10% of the surface of the positive electrode active material.

A content of the cobalt compound containing the cobalt compound in the coating layer may be in a range of about 0.1 mol% to about 5.0 mol%, about 0.5 mol% to about 5.0 mol%, about 1 mol% to about 4 mol%, or about 1.5 mol% to about 3 mol% with respect to the total content (about 100 mol%) of the positive electrode active material. If the content of the cobalt compound is within the above range, $Ni^{3+}$ or $Co^{4+}$ present in a large amount in a metal layer during a synthesis process of the positive electrode active material may be reduced to $Ni^{2+}$ or $Co^{3+}/Co^{2+}$, or two types of ions may be reduced at the same time, thereby reducing reactivity between an electrolyte and an interface of the positive electrode active material.

The coating layer containing the cobalt compound may include cobalt oxide, lithium cobalt oxide, or a combination thereof. In some embodiments, the coating layer containing the cobalt compound may further include at least one selected from boron, manganese, phosphorus, aluminium, zinc, zirconium, and titanium.

The coating layer may have a thickness of about 1 nm to about 50 nm, about 5 nm to about 45 nm, or about 10 nm to about 35 nm. If the thickness of the coating layer is within the above range, it is possible to obtain a positive electrode active material having improved surface resistance characteristics. Here, the thickness of the coating layer can be confirmed through SEM, TEM, etc., and the thickness refers to the average thickness.

The nickel-based lithium metal oxide may be a compound represented by Formula 1 below.

$$\text{Formula 1} \qquad Li_a(Ni_{1-x-y}M1_xM2_y)O_{2\pm\alpha1}$$

In Formula 1, M1 may be at least one element selected from Co, Mn, and Al,

M2 may be at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), $0.95 \leq a \leq 1.1$, $0.6 \leq (1-x-y) < 1$, $0 \leq x < 0.4$, $0 \leq y < 0.4$, $0 \leq \alpha_1 \leq 0.1$, and a case in which x and y are 0 at the same time may be excluded.

The nickel-based lithium metal oxide may be, for example, a compound represented by Formula 2 below.

$$\text{Formula 2} \qquad Li_a(Ni_{1-x-y-z}Co_xM3_yM4_z)O_{2\pm\alpha1}$$

In Formula 2, M3 may be at least one element selected from Mn and Al,

M4 may be at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), $0.95 \leq a \leq 1.1$, $0.6 \leq (1-x-y-z) < 1$, $0 \leq x < 0.4$, $0 \leq y < 0.4$, $0 \leq z < 0.4$, $0 \leq \alpha_1 \leq 0.1$, and a case in which x, y, and z are 0 at the same time may be excluded.

A peak intensity ratio $I_{(003)}/I_{(104)}$ measured through X-ray diffraction analysis using Cu-Kα radiation (1.54056 Å) in the positive electrode active material according to one embodiment may be in a range of about 1.2 to about 4.0, about 1.2 to about 2.0, about 1.3 to about 1.8, about 1.3 to about 1.6, or about 1.3 to about 1.4. If the peak intensity ratio $I_{(003)}/I_{(104)}$ is within the above range, it is possible to improve the stability of a crystal structure of a positive electrode active material.

According to some embodiments, a positive electrode active material may have a nickel content of about 88 mol%, a peak intensity ratio $I_{(003)}/I_{(104)}$ may be in a range of about 1.2 to about 1.4, and in some embodiments a positive electrode active material may have a nickel content of 93 mol%, and a peak intensity ratio $I_{(003)}/I_{(104)}$ may be in a range of about 1.3 to about 2.0.

If a peak intensity ratio $I_{(003)}/I_{(104)}$ of each of the positive electrode active material and an electrode plate including the positive electrode active material is within the above range, it is possible to improve the stability of a crystal structure of the positive electrode active material and improve an expansion rate and a contraction rate according to occlusion/release of lithium. Accordingly, the capacity characteristics of a battery may be improved.

In X-ray diffraction analysis, peak intensities $I_{(003)}$ and $I_{(104)}$ refer to peak intensity $I_{(003)}$ of a (003) plane and peak intensity $I_{(104)}$ of a (104) plane, respectively. In some embodiments, a peak intensity ratio $I_{(003)}/I_{(104)}$ may be an intensity ratio of a (003) plane peak to a (104) plane peak and may be a parameter made to evaluate a degree of uniform orientation (orientation) of crystal grains. By using an intensity ratio of a (003) plane peak to a (104) plane peak, a degree of cation mixing or cation exchange may be evaluated. For example, a (104) plane denotes a plane perpendicular (or substantially perpendicular) to a migration path plane for lithium ions, and, for example, as a degree of orientation of a crystal plane of a layered structure increases, peak intensity of the (104) plane decreases. Therefore, because the number of the same crystal orientation planes increases as orientation increases, peak intensity of the (104) plane decreases, and thus $I_{(003)}/I_{(104)}$ increases. For example, this means that, as the peak intensity ratio $I_{(003)}/I_{(104)}$ increases, a stable positive electrode active material structure is formed.

An area ratio $A_{(003)}/A_{(104)}$ of a (003) plane peak to a (104) plane peak measured by X-ray diffraction analysis in the positive electrode active material according to one embodiment may be in a range of about 1.1 to about 1.4, about 1.12 to about 1.38, about 1.15 to about 1.35, or about 1.2 to about 1.3.

If a peak intensity ratio $I_{(003)}/I_{(104)}$ of the positive electrode according to one embodiment is measured through X-ray diffraction analysis, the peak intensity ratio may be equal to a peak intensity ratio $I_{(003)}/I_{(104)}$ of a positive electrode active material, which is contained in a positive electrode, measured through X-ray diffraction analysis.

A full width at half maximum $(FWHM)_{(003)}$ of the positive electrode active material of the disclosure may be in a range of about 0.079° to about 0.082°, for example, about 0.081°, and $FWHM_{(003)}/FWHM_{(104)}$ may be in a range of about 0.800 to about 0.900, for example, about 0.850. Thus, it can be seen that the positive electrode active material is in a large crystal secondary particle state. In some embodiments, $FWHM_{(003)}$ denotes an FWHM of a peak corresponding to a (003) plane, and $FWHM_{(104)}$ denotes an FWHM of a peak corresponding to a (104) plane.

In some embodiments, if a cross-sectional microstructure of the positive electrode active material according to one embodiment is observed through a SEM, grains and grain boundaries of a sub-micro scale or more may be confirmed, and thus it can be seen that the positive electrode active material is in a large crystal secondary particle state.

If a peak intensity ratio $I_{(003)}/I_{(104)}$ of each of the positive electrode active material and an electrode plate including the positive electrode active material is within the above range, it is possible to improve the stability of a crystal structure of the positive electrode active material and improve an expansion rate and a contraction rate according to occlusion/release of lithium. Accordingly, the capacity characteristics of a battery may be improved.

Hereinafter, a method of preparing a positive electrode active material according to one embodiment will be described.

First, a mixture obtained by mixing together a nickel precursor, at least one metal precursor selected from a precursor M1 and a precursor M2, and a basic solution is subjected to a co-precipitation reaction and then dried to obtain a nickel-based metal precursor having pores therein. The nickel-based metal precursor may have amorphous properties.

The precursor M1 may be identical to M1 in Formula 1 and may include at least one selected from a cobalt precursor, a manganese precursor, and an aluminium precursor. The precursor M2 may be identical to M2 in Formula 1 and may include at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr).

The metal precursor may include, for example, at least one selected from a nickel precursor, a cobalt precursor, a manganese precursor, and the precursor M2 including a metal.

During the co-precipitation reaction, a pH of the mixture may be adjusted in two stages. A first stage may be a pore formation section, and the pH of the mixture may be controlled to be in a range of about 11.5 to about 12. A second stage may be a particle growth section, and the pH of the mixture may be controlled, for example, to be in a range of about 10.5 to about 11.9. The second stage may be performed at lower pH than the first stage. In this way, by changing a co-precipitation rate, a difference in synthesis rate between the inside and the outside of the nickel-based metal precursor may be generated. As a result, it is possible to obtain the nickel-based metal precursor having pores therein. In some embodiments, the nickel-based metal precursor represents a precursor for obtaining a nickel-based lithium metal oxide.

In the first stage, the pH of the mixture may be adjusted, for example, to be in a range of about 11.6 to about 11.9 or about 11.7 to about 11.8. In the second stage, the pH of the mixture may be adjusted, for example, to be in a range of about 10.8 to about 11.7, about 11 to about 11.7, about 11.2 to about 11.6, or about 11.3 to about 11.6. A difference between the pH of the second stage and the pH of the first stage may be in a range of about 0.1 to about 1.5, about 0.1 to about 1.0, about 0.1 to about 0.8, about 0.1 to about 0.6, about 0.1 to about 0.5, about 0.1 to about 0.3, or about 0.1 to about 0.2. As described above, the pH of the second stage may be reduced to satisfy the above-described difference as compared with the pH of the first stage to change a co-precipitation rate, thereby generating a difference in synthesis rate between the inside and the outside of the nickel-based metal precursor. As a result, it is possible to obtain the nickel-based metal precursor having pores therein. In some embodiments, the nickel-based metal precursor represents a precursor for obtaining a nickel-based lithium metal oxide.

Although a stirring time of the first stage may vary according to pH conditions and/or the like of the first stage, the stirring time of the first stage may be, for example, in a range of about 8 hours to about 12 hours or about 9 hours to about 10 hours.

In the disclosure, because the above-described co-precipitation reaction may be performed at a faster rate as compared with a general method of preparing a positive electrode active material precursor, pore distribution of a core may be controlled to be high, and thus a positive electrode active material may be easily prepared without a separate pulverization process being performed on the positive electrode active material, thereby improving productivity. If pore distribution is controlled to be high, the number of pores may be increased in the positive electrode active material after heat treatment, and thus the positive electrode active material may be easily broken during pressing, thereby allowing a positive electrode to exhibit excellent electrochemical properties. In some embodiments, if a stirring rate is increased to adjust a stirring time to be relatively shorter, a co-precipitation reaction may be performed at a high rate.

Like a positive electrode active material, a metal precursor having pores therein may include secondary particles including a plurality of primary particles and may have a hollow structure having pores therein. The large crystal secondary particles may have a size of about 10 $\mu$m to about 18 $\mu$m. The primary particles may have a size of about 0.2 $\mu$m to about 0.3 $\mu$m.

The nickel-based metal precursor having pores therein may exhibit amorphous properties and may have the inside in which pores are present and the outside having a denser structure than the inside. The amorphous properties of the nickel-based metal precursor may be verified through X-ray diffraction analysis.

As used herein, the term "inside" of a nickel-based metal precursor refers to a pore region in which a plurality of pores are present and refers to a region having of 50 vol% to 70 vol% from a center, for example, 60 vol%, with respect to the total volume from the center to a surface of the nickel-based metal precursor or refers to a remaining region except for a (peripheral) region within 3 $\mu$m from the outermost side of the nickel-based metal precursor among the total distance from the center to the surface of the nickel-based metal precursor.

According to another embodiment, the inside of the nickel-based metal precursor may be a pore region and may refer to a region having a major axis length of about 2 $\mu$m to about 7 $\mu$m, for example, about 3.5 $\mu$m to about 5 $\mu$m.

In a nickel-based metal precursor having pores therein, a pore region may have a size of about 2 $\mu$m to about 7 $\mu$m, and secondary particles may have a size of about 10 $\mu$m to about 15 $\mu$m or about 11 $\mu$m to about 14 $\mu$m. If the size of the pore region and the size of the secondary particles of the metal precursor are within the above ranges, it is possible to obtain a positive electrode active material having excellent phase stability and improved capacity characteristics.

The mixture may include a complexing agent, a pH adjusting agent, and/or the like.

The pH adjusting agent may serve to lower the solubility of metal ions in a reactor and to allow the metal ions to be precipitated as hydroxides. The pH adjusting agent may include, for example, ammonium hydroxide, sodium hydroxide (NaOH), sodium carbonate ($Na_2CO_3$), and/or the like. The pH adjusting agent may include, for example, sodium hydroxide (NaOH).

The complexing agent may serve to adjust a reaction rate for forming a precipitate in a co-precipitation reaction. The complexing agent may include ammonium hydroxide ($NH_4OH$) (ammonia water), a citric acid, an acrylic acid, a tartaric acid, a glycolic acid, and/or the like. A content of the complexing agent may be at any suitable level generally used in the art. The complexing agent may include, for example, aqueous ammonia.

A product obtained through the co-precipitation reaction may be cleaned and then dried to obtain a suitable or desired nickel-based metal precursor. In some embodiments, the drying may be performed under any suitable conditions generally used in the art.

The nickel precursor and at least one metal precursor selected from the precursor M1 and the precursor M2 may respectively include, for example, a nickel precursor, a manganese precursor, and a cobalt precursor. In some embodiments, the metal precursor may respectively include, for example, a nickel precursor, a cobalt precursor, and an aluminium precursor.

Examples of the nickel precursor may include $Ni(OH)_2$, NiO, NiOOH, $NiCO_3$, $2Ni(OH)_2 \cdot 4H_2O$, $NiC_2O_4 \cdot 2H_2O$, $Ni(NO_3)_2 \cdot 6H_2O$, $NiSO_4$, $NiSO_4 \cdot 6H_2O$, a fatty acid nickel salt, nickel halide, or a combination thereof. Examples of the manganese precursor may include manganese oxides such as $Mn_2O_3$, $MnO_2$, and $Mn_3O_4$, manganese salts such as $MnCO_3$, $Mn(NO_3)_2$, $MnSO_4$, $MnSO_4 \cdot H_2O$, manganese acetate, a dicarboxylic acid manganese salt, manganese citrate, and a fatty acid manganese salt, manganese oxyhydroxide, manganese halide such as manganese chloride, or a combination thereof.

Examples of the cobalt precursor may include $Co(OH)_2$, $CoOOH$, $CoO$, $Co_2O_3$, $Co_3O_4$, $C_O(OCOCH_3)_2 \cdot 4H_2O$, $CoCl_2$, $C_O(NO_3)_2 \cdot 6H_2O$, $CoSO_4$, $Co(SO_4)_2 \cdot 7H_2O$, or combination thereof.

Examples of the aluminium precursor may include aluminium hydroxide, aluminium chloride, aluminium oxide, or a combination thereof.

In the above-described precursor M2, a precursor containing each element may be a salt, hydroxide, oxyhydroxide, halide, or a combination thereof which contains each element. The salt containing each element may include, for example, at least one selected from sulfate, alkoxide, oxalate, phosphate, halide, oxyhalide, sulfide, oxide, peroxide, acetate, nitrate, carbonate, citrate, phthalate, and perchlorate which each contain the element described above.

A content of the nickel precursor and at least one metal precursor selected from the precursor M1 and the precursor M2 may be stoichiometrically controlled to obtain a suitable or desired nickel-based metal precursor.

The nickel-based metal precursor may be a compound represented by Formula 3, a compound represented by Formula 4, or a combination thereof.

$$\text{Formula 3} \qquad (Ni_{1-x-y}M1_xM2_y)(OH)_2$$

In Formula 3, M1 may be at least one element selected from Co, Mn, and Al,

M2 may be at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), $0.6 \leq (1-x-y) < 1$, $0 \leq x < 0.4$, and $0 \leq y < 0.4$, and a case in which x and y are 0 at the same time may be excluded.

$$\text{Formula 4} \qquad (Ni_{1-x-y}M1_xM2_y)O$$

In Formula 4, M1 may be at least one element selected from Co, Mn, and Al,

M2 may be at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), $0.6 \leq (1-x-y) < 1$, $0 \leq x < 0.4$, $0 \leq y < 0.4$, and a case in which x and y are 0 at the same time may be excluded.

The nickel-based metal precursor may be, for example, a compound represented by a compound of Formula 5, a compound of Formula 6, or a combination thereof.

$$\text{Formula 5} \qquad Ni_{1-x-y-z}Co_xM3_yM4_z(OH)_2$$

In Formula 5, M3 may be at least one element selected from Mn and Al,

M4 may be at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), $0.6 \leq (1-x-y-z) < 1$, $0 \leq x < 0.4$, $0 \leq y < 0.4$, $0 \leq z < 0.4$, and a case in which x, y, and z are 0 at the same time may be excluded.

$$\text{Formula 6} \qquad (Ni_{1-x-y-z}Co_xM3_yM4_z)O$$

In Formula 6, M3 may be at least one element selected from Mn and Al,

M4 may be at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), $0.6 \leq (1-x-y-z) < 1$, $0 \leq x < 0.4$, $0 \leq y < 0.4$, $0 \leq z < 0.4$, and a case in which x, y, and z are 0 at the same time may be excluded.

The nickel-based metal precursor may be, for example, a compound represented by Formula 7, a compound represented by Formula 8, or a combination thereof.

$$\text{Formula 7} \qquad Ni_{1-x-y-z}Co_xMn_yM4_z(OH)_2$$

In Formula 7, M4 may be at least one element selected from boron (B), magnesium (Mg), calcium (Ca), strontium (Sr), barium (Ba), titanium (Ti), vanadium (V), chromium (Cr), iron (Fe), copper (Cu), zirconium (Zr), and aluminium, $0.6 \leq (1-x-y-z) < 1$, $0 \leq x < 0.4$, $0 \leq y < 0.4$, $0 \leq z < 0.4$, and a case in which x, y, and z are 0 at the same time may be excluded.

$$\text{Formula 8} \qquad Li_a(Ni_{1-x-y-z}Co_xAl_yM4_z)O$$

In Formula 8, M4 may be at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), $0.95 \leq a \leq 1.1$, $0.6 \leq (1-x-y-z) < 1$, $0 \leq x < 0.4$, $0 \leq y < 0.4$, $0 \leq z < 0.4$, and a case in which x, y, and z are 0 at the same time may be excluded.

Subsequently, a mixture of the nickel-based metal precursor having pores therein and a lithium precursor is obtained.

A mixing ratio of the lithium precursor and the nickel-based metal precursor may be stoichiometrically adjusted to prepare a positive electrode active material according to an embodiment. A molybdenum precursor is added to the mixture, and then primary heat treatment is performed on an obtained mixture. A phase change and grain growth may occur through the primary heat treatment.

A disintegration process may be performed on a product subjected to the primary heat treatment without a pulverization process on the product subjected to the primary heat treatment, to obtain a product in a hollow secondary particle state.

Examples of the molybdenum precursor may include molybdenum hydroxide, molybdenum chloride, molybdenum oxide, ammonium molybdate, or a combination thereof.

Examples of the ammonium molybdate may include ammonium heptamolybdate hydrate $((NH_4)_6Mo_7O_{24} \cdot 4H_2O)$.

Subsequently, a cobalt precursor is added to the product in the hollow secondary particle state to obtain a mixture.

The cobalt precursor may be used in forming a coating layer containing a cobalt compound which is on a surface of a nickel-based lithium metal oxide.

As used herein, "pulverization" refers to a process which, because secondary particles are formed through aggregation between primary particles, is performed using equipment such as a jet mill that applies a strong force (e.g., air pressure, mechanical pressure, and/or the like) to remove or undo such aggregation.

Secondary heat treatment is performed on the mixture obtained according to such a process to prepare a positive electrode active material according to one embodiment.

The secondary heat treatment is performed at a lower temperature than the primary heat treatment, and if the secondary heat treatment is performed, crystallinity may be recovered. If the secondary heat treatment is performed at a higher temperature than the primary heat treatment, it is difficult to obtain a large crystal having excellent phase stability. In some embodiments, if the product subjected to the primary heat treatment in the method of preparing a positive electrode active material is subjected to a pulverization process, it is difficult to obtain a positive electrode active material having a hollow structure.

The nickel-based metal precursor and the lithium precursor may be mixed together such that a molar ratio Li/Me (wherein Me is a metal other than Li) is about 0.9 or more and less than about 1.1, more than about 1.0 and less than about 1.1, in a range of about 1.01 to about 1.05, or in a range of about 1.02 to about 1.04. An operation of mixing together the nickel-based metal precursor and the lithium precursor may be performed through two processes rather than one process. For example, during primary mixing, a molar ratio Li/Metal (metal other than Li) of the nickel-based metal precursor and the lithium precursor may be controlled to be about 0.9, and during secondary mixing, a molar ratio Li/Me (metal other than Li) thereof may be controlled to be about 0.5.

Examples of the lithium precursor may include lithium hydroxide, lithium carbonate, lithium sulfate, lithium nitrate, or a combination thereof.

The primary heat treatment may be performed at a temperature of about 800 °C to about 1,200 °C, about 830 °C to about 1,150 °C, about 850 °C to about 1,100 °C, about 850 °C to about 950 °C, or about 870 °C to about 920 °C in an oxidizing gas atmosphere, and the secondary heat treatment may be performed at a temperature of about 600 °C to about 850 °C, about 600 °C to about 800 °C, about 650 °C to about 800 °C, about 700 °C to about 800 °C, or about 720 °C to about 790 °C in an oxidizing gas atmosphere. If the primary heat treatment and the secondary heat treatment are performed under the above conditions, it is possible to manufacture a high-density and long-lifetime lithium secondary battery.

A time of the primary heat treatment may vary depending on a temperature of the primary heat treatment, and the primary heat treatment may be performed, for example, for about 8 hours to 20 hours.

For the oxidizing gas atmosphere, an oxidizing gas such as oxygen and/or air may be used. For example, the oxidizing gas may include about 10 vol% to about 20 vol% of oxygen and/or air and about 80 vol% to about 90 vol% of an inert gas.

A disintegration process may be further performed between the above-described primary heat treatment and secondary heat treatment. If the disintegration process is performed in this way, a particle aggregation phenomenon may be further resolved, thereby manufacturing a high-density and long-lifetime lithium secondary battery.

As used herein, "disintegration" is generally performed using equipment such as a cutter mill, a roll crusher, and/or a ball mill so as to remove weak aggregation between secondary particles. Such a disintegration process may be performed by dispersing particles to have a suitable or appropriate size using a rotary impact grinder, a cutter mill, a ball mill, and/or a bead mill equipped with a classification mechanism such as a screen. As used herein, "disintegration" refers to a process of dispersing materials such as particle aggregates and granules aggregated with a relatively weak force.

According to one embodiment, disintegration may be performed at about 100 rpm to about 300 rpm, about 100 to about 250 rpm, or about 120 to about 275 rpm through a roll crusher. An interval of the roll crusher may be in a range of about 1 mm to about 3 mm, about 1.2 to about 2.8 mm, or about 1.5 mm. Although a stirring time for disintegration varies depending on disintegration conditions, the disintegration may be generally performed for about 10 seconds to about 60 seconds.

The cobalt precursor used in forming the coating layer containing the cobalt compound may include a cobalt compound-containing hydroxide, sulfate, alkoxide, oxalate, phosphate, halide, oxyhalide, sulfide, oxide, peroxide, acetate, nitrate, carbonate, citrate, phthalate, perchlorate, or a combination thereof. Examples of the cobalt precursor may include at least one compound selected from $Co_3O_4$, $Co(OH)_2$, $CoO$, $CoOOH$, $Co(OCOCH_3)_2 \cdot 4H_2O$, $Co(NO_3)_2 \cdot 6H_2O$, and $Co(SO_4)_2 \cdot 7H_2O$.

A content of the cobalt precursor may be stoichiometrically adjusted such that a content of the cobalt compound contained in the coating layer containing the cobalt compound is in a range of about 0.1 mol% to about 5.0 mol% or 0.5 mol% to about 5.0 mol% with respect to the total content of the positive electrode active material.

The nickel-based metal precursor and the lithium precursor may be mixed together through dry mixing and may be mixed together using a mixer and/or the like. Dry mixing may be performed using milling. Although milling conditions are not particularly limited, milling may be performed such that a precursor used as a starting material is barely deformed. A size of the lithium precursor mixed together with the nickel-based metal precursor may be controlled in advance. The lithium precursor may have a size (average particle diameter) of about 5 $\mu$m to about 15 $\mu$m, about 7 $\mu$m to about 12 $\mu$m, or, for example, about 10 $\mu$m. Milling may be performed on a precursor and the lithium precursor having such a size at about 300 rpm to about 3,000 rpm to obtain a suitable or desired mixture. If an internal temperature of a mixer rises to 30 °C or higher during a milling process, a cooling process may be performed to maintain the internal temperature of the mixer within room temperature (25 °C).

The nickel-based metal precursor may be, for example, $Ni_{0.92}Co_{0.06}Mn_{0.02}(OH)_2$, $Ni_{0.92}CO_{0.05}Al_{0.03}(OH)_2$, $Ni_{0.94}Co_{0.03}Al_{0.03}(OH)_2$, $Ni_{0.88}CO_{0.06}Al_{0.06}(OH)_2$, $Ni_{0.96}CO_{0.02}Al_{0.02}(OH)_2$, $Ni_{0.93}Co_{0.04}Al_{0.03}(OH)_2$, $Ni_{0.8}Co_{0.15}Al_{0.05}O_2(OH)_2$, $Ni_{0.75}Co_{0.20}Al_{0.05}(OH)_2$, $Ni_{0.92}Co_{0.05}Mn_{0.03}(OH)_2$, $Ni_{0.94}Co_{0.03}Mn_{0.03}(OH)_2$, $Ni_{0.88}Co_{0.06}Mn_{0.06}(OH)_2$, $Ni_{0.96}Co_{0.02}Mn_{0.02}(OH)_2$, $Ni_{0.93}CO_{0.04}Mn_{0.03}(OH)_2$, $Ni_{0.8}Co_{0.15}Mn_{0.05}(OH)_2$, $Ni_{0.75}Co_{0.20}Mn_{0.05}(OH)_2$, $Ni_{0.6}Co_{0.2}Mn_{0.2}(OH)_2$, $Ni_{0.7}CO_{0.15}Mn_{0.15}(OH)_2$, $Ni_{0.7}Co_{0.1}Mn_{0.2}(OH)_2$, $Ni_{0.8}Co_{0.1}Mn_{0.1}(OH)_2$, or $Ni_{0.85}Co_{0.1}Al_{0.05}(OH)_2$.

A nickel-based lithium metal oxide according to one embodiment may be, for example, $LiNi_{0.92}Co_{0.06}Mn_{0.02}O_2$, $Li_{1.05}Ni_{0.92}Co_{0.05}Al_{0.03}O_2$, $Li_{1.05}Ni_{0.94}CO_{0.03}Al_{0.03}O_2$, $Li_{1.05}Ni_{0.88}CO_{0.06}Al_{0.06}O_2$, $Li_{1.05}Ni_{0.96}Co_{0.02}Al_{0.02}O_2$, $Li_{1.05}Ni_{0.93}CO_{0.04}Al_{0.03}O_2$, $Li_{1.05}Ni_{0.8}Co_{0.15}Al_{0.05}O_2$, $Li_{1.05}Ni_{0.75}CO_{0.20}Al_{0.05}O_2$, $Li_{1.05}Ni_{0.92}Co_{0.05}Mn_{0.03}O_2$, $Li_{1.05}Ni_{0.94}Co_{0.03}Mn_{0.03}O_2$, $Li_{1.05}Ni_{0.88}Co_{0.06}Mn_{0.06}O_2$, $Li_{1.05}Ni_{0.96}Co_{0.02}Mn_{0.02}O_2$, $Li_{1.05}Ni_{0.93}Co_{0.04}Mn_{0.03}O_2$, $Li_{1.05}Ni_{0.8}Co_{0.15}Mn_{0.05}O_2$, $Li_{1.05}Ni_{0.75}Co_{0.20}Mn_{0.05}O_2$, $Li_{1.05}Ni_{0.6}Co_{0.2}Mn_{0.2}O_2$, $Li_{1.05}Ni_{0.7}Co_{0.15}Mn_{0.15}O_2$, $Li_{1.05}Ni_{0.7}Co_{0.1}Mn_{0.2}O_2$, $Li_{1.05}Ni_{0.8}Co_{0.1}Mn_{0.1}O_2$, or $Li_{1.05}Ni_{0.85}Co_{0.1}Al_{0.05}O_2$.

According to aspects of embodiments, there is provided a positive electrode for a lithium secondary battery including a positive electrode current collector, the above-described positive electrode active material, and at least one selected from single particles having the same composition as the positive electrode active material and an aggregate thereof.

The positive electrode according to one embodiment may include, for example, the above-described positive electrode active material and single crystal single particles having the same composition as the positive electrode active material.

The single particles may refer to a product obtained by some of the large crystal secondary particles of a nickel-based lithium metal oxide being crushed or broken during pressing of a positive electrode, rather than large crystal secondary particles of a nickel-based lithium metal oxide which are a starting material used in manufacturing a positive electrode active material layer.

The positive electrode active material of the positive electrode according to one embodiment may include pores having a size of about 0.5 $\mu$m to about 4 $\mu$m or about 0.5 $\mu$m to about 2 $\mu$m. A size of pores may be confirmed through SEM analysis. If pores are spherical, a size of the pores refers to an average diameter, and if pores are non-spherical, a size of the pores refers to an average major axis length.

After the positive electrode is pressed, the positive electrode active material may be disintegrated to disperse aggregated primary particles, thereby preparing a single crystal positive electrode plate. The pore may be, for example, a closed pore. A density of the positive electrode after pressing may be about 3.3 g/cc or more.

The positive electrode may include a positive electrode active material layer having a structure in which particles are broken due to a surface portion being more pressed than a central portion adjacent to the positive electrode current collector. A reason why the positive electrode active material layer has the above-described structure is that the surface portion is more pressed than the central portion adjacent to the positive electrode current collector. The structure of the positive electrode active material layer may be evaluated based on an area of a SEM image and/or the like.

The central portion of the positive electrode active material may have a size of about 1 $\mu$m to about 7 $\mu$m, and the surface portion of the positive electrode active material may have a size of about 1 $\mu$m to about 5 $\mu$m.

The positive electrode may include a positive electrode active material layer having a structure in which a center portion adjacent to the positive electrode current collector comprising a greater amount of the positive electrode active material, which has a hollow structure, than the surface portion. The structure of the positive electrode active material layer may be evaluated based on an area of a SEM image and/or the like. A size of the pores of the positive electrode active material in the positive electrode after the positive electrode is pressed may be different from a size of the pores of the positive electrode active material before the positive electrode is pressed.

The positive electrode according to one embodiment may include, for example, one or two positive electrode active material layers. A structure of the positive electrode active material layer may be confirmed utilizing a SEM, a transmission electron microscope (TEM), and/or the like.

The term "surface portion" as used herein refers to an area of a positive active material layer farther from a positive electrode current collector (substrate). The surface portion may be an area of about 30 length% to about 50 length% from an outermost surface of the positive electrode active material layer, for example, an area of 40 length% or an area (based on the positive electrode active material layer having a total thickness of 40 $\mu$m) within 20 $\mu$m (based on an electrode plate of 40 $\mu$m) from the outermost surface of the positive electrode active material layer.

The term "center portion" as used herein refers to an area of a positive active material layer adjacent to a positive electrode current collector (substrate). The center portion may be an area of about 50 length% to about 70 length% of the total length from the positive electrode current collector to an outermost surface of the positive electrode active material layer, for example, an area of 60 length% or an area except the other area within 20 $\mu$m from the outermost surface of the positive active material layer.

The positive electrode according to one embodiment may be prepared without a pulverization process being performed on the positive electrode active material, thereby improving productivity.

A lithium secondary battery according to another embodiment includes the above-described positive electrode, a negative electrode, and an electrolyte interposed therebetween.

By using a method of preparing a positive electrode active material according to one embodiment, aggregation between particles may be suppressed or reduced, productivity may be improved, and a single crystal positive electrode active material may be prepared without a pulverization process. A lithium secondary battery having high density and improved lifetime may be manufactured using the positive electrode active material.

Hereinafter, a method of manufacturing a lithium secondary battery which includes a positive electrode including a positive electrode active material, a negative electrode, a lithium salt-containing non-aqueous electrolyte, and a separator according to one embodiment will be described.

A composition for forming a positive electrode active material layer and a composition for forming a negative electrode active material layer may be respectively applied on current collectors and dried to form a positive electrode active material layer and a negative electrode active material layer, thereby preparing a positive electrode and a negative electrode.

The composition for forming the positive electrode active material layer may be prepared by mixing together a positive electrode active material, a conductive material (e.g., an electrically conductive material), a binder, and a solvent, and a nickel-based active material according to one embodiment may be used as the positive electrode active material.

The binder of the positive electrode may serve to improve adhesion between positive electrode active material particles and adhesive strength between the positive electrode active material and a positive electrode current collector. Examples of the binder may be polyvinylidene fluoride (PVDF), a polyvinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene (PE), polypropylene, an ethylene-propylene-diene monomer (EPDM), a sulfonated-EPDM, styrene-butadiene rubber (SBR), fluorine rubber, and/or various suitable copolymers thereof, and any one thereof or a mixture of two or more thereof may be used.

As the conductive material, a material is not particularly limited as long as the material has conductivity (e.g., electrical conductivity) without causing a chemical change in a corresponding battery (e.g., substantially without causing an undesirable chemical change in the corresponding battery). For example, the conductive material may include graphite such as natural graphite and/or artificial graphite, a carbon-based material such as carbon black, acetylene black, Ketjen black, channel black, furnace black, lamp black, and/or summer black, a conductive fiber such as a carbon fiber and/or a metal fiber, fluorinated carbon, a metal powder such as an aluminium and/or nickel powder, conductive whiskers such as zinc oxide and/or potassium titanate, a conductive metal oxide such as titanium oxide, a conductive material such as a polyphenylene derivative, and/or the like.

A content of the conductive material may be in a range of about 1 part by weight to about 10 parts by weight or about 1 part by weight to about 5 parts by weight with respect to about 100 parts by weight of the positive electrode active material. If the content of the conductive material is within the above range, the conductivity characteristics of a finally obtained electrode may be excellent.

As a non-limiting example of the solvent, N-methylpyrrolidone, and/or the like may be used, and a content of the solvent may be in a range of about 20 parts by weight to about 200 parts by weight with respect to about 100 parts by weight of the positive electrode active material. If the content of the solvent is within the above range, an operation of forming the positive electrode active material layer may be easy.

As the positive electrode current collector, a material is not particularly limited as long as the material has high conductivity without causing a chemical change in a corresponding battery (e.g., substantially without causing an undesirable chemical change in the corresponding battery). For example, the positive electrode current collector may include stainless steel, aluminium, nickel, titanium, carbon subjected to heat treatment, and/or copper and/or stainless steel which is surface-treated with carbon, nickel, titanium, silver, and/or the like. A fine unevenness may be formed on a surface of a positive electrode current collector to strengthen adhesive strength of a positive electrode active material, and the positive electrode current collector may have various suitable forms such as a film, a sheet, a foil, a net, a porous body, a foam body, and/or a nonwoven fabric.

The positive electrode current collector may include, for example, a base film and a metal layer on one or both surfaces of the base film. The base film may include, for example, a polymer. The polymer may be, for example, a thermoplastic polymer. The polymer may include, for example, polyethylene terephthalate (PET), PE, polypropylene (PP), polybutylene terephthalate (PBT), polyimide (PI), or a combination thereof. Because the base film may incude the thermoplastic polymer, if a short circuit occurs, the base film may be liquefied to suppress or reduce a rapid increase in current. The base film may be, for example, an insulator (e.g., an electrical insulator). The metal layer may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), and/or an alloy thereof. The positive electrode current collector may additionally include a metal piece and/or a lead tab. For more example contents of the base film, the metal layer, the metal piece, and the lead tab of the positive electrode current collector, contents of a negative electrode current collector to be described below are referred to. Because the positive electrode current collector has such a structure, a weight of an electrode may be reduced, thereby improving an energy density.

Separately, a composition for forming a negative electrode active material layer is prepared by mixing together a negative electrode active material, a binder, and a solvent.

The negative electrode active material may include a material capable of reversibly intercalating/deintercalating lithium ions, a lithium metal, a lithium metal alloy, a material capable of doping and dedoping lithium, a transition metal oxide, or a combination thereof.

Examples of the material capable of reversibly intercalating/deintercalating lithium ions may include a carbon material, for example, any suitable carbon-based negative electrode active material generally used in a lithium secondary battery. Representative examples of the carbon-based negative electrode active material may include crystalline carbon, amorphous carbon, or a combination thereof. Examples of the crystalline carbon may include graphite such as natural graphite and/or artificial graphite having a non-shaped, plate-like, flake-like, spherical, and/or fibrous form. Examples of the amorphous carbon may be include soft carbon, hard carbon, mesophase pitch carbide, and/or fired coke.

The lithium metal alloy may include an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may include a silicon-based material such as Si, $SiO_x$ ($0<x<2$), a Si-Q alloy (wherein Q is an element selected from an alkali metal, an alkaline-earth metal, a Group 13 element, a Group 14 element except Si, a Group 15 element, a Group 16 element, a rare earth element, and a combination thereof), and/or a Si-carbon composite, Sn, $SnO_2$, a Sn-R alloy (wherein R is an element selected from an alkali metal, an alkaline-earth metal, a Group 13 element, a Group 14 element except Sn, a Group 15 element, a Group 16 element, a rare earth element, and a combination thereof), a Sn-carbon composite, or a combination thereof. In some embodiments, at least one thereof and $SiO_2$ may be mixed together and used. The elements Q and R may include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn (excluded for R), In, Ge, P, As, Sb, Bi, S, Se, Te, Po, or a combination thereof.

A lithium titanium oxide may be used as the transition metal oxide.

Non-limiting examples of the binder of the negative electrode may include various suitable types (or kinds) of binder polymers such as a PVDF-co-HFP, PVDF, polyacrylonitrile, polymethyl methacrylate, polyvinyl alcohol, CMC, starch, hydroxypropylcellulose, regenerated cellulose, polyvinylpyrrolidone, tetrafluoroethylene, PE, polypropylene, a polyacrylic acid, an EPDM, a sulfonated-EPDM, SBR, fluorine rubber, a polymer in which hydrogen thereof is substituted with Li, Na, and/or Ca, and various suitable copolymers.

The negative electrode active material layer may further include a thickener.

The thickener may include at lese one selected from CMC, carboxyethyl cellulose, starch, regenerated cellulose, ethyl cellulose, hydroxymethyl cellulose, hydroxyethyl cellulose, hydroxypropyl cellulose, and polyvinyl alcohol, and, for example, CMC may be used.

A content of the solvent may be in a range of about 100 parts by weight to about 300 parts by weight with respect to about 100 parts by weight of the total weight of the negative electrode active material. If the content of the solvent is within the above range, an operation of forming the negative electrode active material layer may be easy.

The negative electrode active material layer does not require a conductive material if conductivity is secured. The negative electrode active material layer may further include a conductive material (e.g., an electrically conductive material) as needed or desired. As the conductive material, a material is not particularly limited as long as the material has conductivity (e.g., electrical conductivity) without causing a chemical change in a corresponding battery (e.g., substantially without causing an undesirable chemical change in the corresponding battery). For example, the conductive material may include graphite such as natural graphite and/or artificial graphite, a carbon-based material such as carbon black, acetylene black, Ketjen black, channel black, furnace black, lamp black, and/or summer black, a conductive fiber such as a carbon fiber and/or a metal fiber, conductive tubes such as carbon nanotubes, fluorinated carbon, a metal powder such as an aluminium and/or nickel powder, conductive whiskers such as zinc oxide and/or potassium titanate, a conductive metal oxide such as titanium oxide, a conductive material (e.g., an electrically conductive material) such as a polyphenylene derivative, and/or the like. The conductive material may, for example, be carbon black, and, for example, the conductive material may be carbon black having an average particle diameter of several tens of nanometers.

If the negative electrode active material layer includes the conductive material, a content of the conductive material may be in a range of about 0.01 parts by weight to about 10 parts by weight, about 0.01 parts by weight to about 5 parts by weight, or about 0.1 parts by weight to about 2 parts by weight with respect to the total weight of about 100 parts by weight of the negative electrode active material layer.

The negative electrode current collector may be generally prepared to have a thickness of about 3 $\mu$m to about 500 $\mu$m. As the negative electrode current collector, a material is not particularly limited as long as the material has high conductivity (e.g., high electrical conductivity) without causing a chemical change in a corresponding battery (e.g., substantially without causing an undesirable change in the corresponding battery). For example, the negative electrode current collector may include copper, stainless steel, aluminium, nickel, titanium, carbon subjected to heat treatment, copper and/or stainless steel which is surface-treated with carbon, nickel, titanium, silver, and/or the like, and/or an aluminium-cadmium alloy. In some embodiments, similarly to the positive electrode current collector, a fine unevenness may be formed on a surface of the negative electrode current collector to strengthen bonding strength of the negative electrode active material, and the negative electrode current collector may have various suitable forms such as a film, a sheet, a foil, a net, a porous body, a foam body, and/or a nonwoven fabric.

The negative electrode current collector may include, for example, a base film and a metal layer on one or both surfaces of the base film. The base film may include, for example, a polymer. The polymer may be, for example, a thermoplastic polymer. The polymer may include, for example, PET, PE, PP, PBT, PI, or a combination thereof. Because the base film incudes the thermoplastic polymer, if a short circuit occurs, the base film may be liquefied to suppress or reduce a rapid increase in current. The base film may be, for example, an insulator (e.g., an electrical insulator). The metal layer may include, for example, copper (Cu), stainless steel, titanium (Ti), iron (Fe), cobalt (Co), nickel (Ni), and/or an alloy thereof. The metal layer may serve as an electrochemical fuse to be cut if an overcurrent occurs, thereby performing a short circuit prevention function (e.g., reduces a likelihood or degree of short circuiting). A thickness of the metal layer may be adjusted to adjust a limit current and a maximum current. The metal layer may be plated and/or deposited on the base film. If the thickness of the metal layer is decreased, a limit current and/or a maximum current of the negative electrode current collector may be decreased, and thus stability of a lithium battery during a short circuit may be improved. A lead tab may be added onto the metal layer for external connection. The lead tab may be welded to the metal layer or a metal layer/base film stack through ultrasonic welding, laser welding, spot welding, and/or the like. While the base film and/or the metal layer are melted during welding, the metal layer may be electrically connected to the lead tab. In order to more strongly weld the metal layer and the lead tab, a metal piece may be added between the metal layer and the lead tab. The metal piece may be a flake made of the same material as a metal of the metal layer. The metal piece may be, for example, a metal foil and/or a metal mesh. The metal piece may be, for example, an aluminium foil, a copper foil, and/or a SUS foil. If the metal piece is on the metal layer and then welded to the lead tab, the lead tab may be welded to the metal piece/metal layer stack or a metal piece/metal layer/base film stack. During welding, while the base film, the metal layer, and/or the metal piece are melted, the metal layer or a metal layer/metal piece stack may be electrically connected to the lead tab. A metal chip and/or a lead tab may be added onto a portion of the metal layer. The base film may have, for example, a thickness of about 1 $\mu$m to 50 $\mu$m, about 1.5 $\mu$m to about 50 $\mu$m, about 1.5 $\mu$m to about 40 $\mu$m, or about 1 $\mu$m to about 30 $\mu$m. If the base film has a thickness in such a range, a weight of an electrode assembly may be more effectively reduced. A melting point of the base film may be, for example, in a range of about 100 °C to about 300 °C, about 100 °C to about 250 °C, or about 100 °C to about 200 °C. Because the base film may have a melting point in such a range, the base film may be melted and easily coupled to the lead tab in a process of welding the lead tab. In order to improve adhesive strength between the base film and the metal layer, surface treatment such as corona treatment may be performed on the base film. The metal layer may have, for example, a thickness of about 0.01 $\mu$m to about 3 $\mu$m, about 0.1 $\mu$m to about 3 $\mu$m, about 0.1 $\mu$m to about 2 $\mu$m, or about 0.1 $\mu$m to about 1 $\mu$m. If the metal layer has a thickness in such a range, the stability of an electrode assembly may be secured while conductivity (e.g., electrical conductivity) is maintained. The metal piece may have, for example, a thickness of about 2 $\mu$m to about 10 $\mu$m, about 2 $\mu$m to about 7 $\mu$m, or about 4 $\mu$m to about 6 $\mu$m. If the metal piece has a thickness in such a range, the metal layer and the lead tab may be more easily connected. Because the negative electrode current collector has such a structure, a weight of an electrode may be reduced, thereby improving an energy density.

A separator may be interposed between the positive electrode and the negative electrode prepared according to such a process.

The separator has a pore diameter of about 0.01 $\mu$m to about 10 $\mu$m and a thickness of about 5 $\mu$m to about 30 $\mu$m. As an example, the separator may include an olefin-based polymer such as polypropylene and/or PE, a sheet and/or nonwoven fabric made of a glass fiber, and/or the like. If a solid electrolyte such as a polymer is used as an electrolyte, the solid electrolyte may also serve as the separator.

The lithium salt-containing non-aqueous electrolyte may include a non-aqueous electrolyte and a lithium salt. The non-aqueous electrolyte may include a non-protic organic solvents, an organic solid electrolyte, an inorganic solid electrolyte, and/or the like.

Non-limiting examples of the non-aqueous electrolyte may include non-protic organic solvents such as N-methyl-2-pyrrolidinone, propylene carbonate, ethylene carbonate (EC), butylene carbonate, dimethyl carbonate, diethyl carbonate, gamma-butyrolactone, 1,2-dimethoxyethane, 2-methyl tetrahydrofuran, dimethylsulfoxide, 1,3-dioxolane, N,N-formamide, N,N-dimethylformamide, dioxolane, acetonitrile, nitromethane, methyl formate, methyl acetate, phosphoric acid triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

Non-limiting examples of the organic solid electrolyte may include a polyethylene derivative, a polyethylene oxide derivative, a polypropylene oxide derivative, a phosphoric acid ester polymer, polyester sulfide, polyvinyl alcohol, PVDF, or a combination thereof.

Non-limiting examples of the inorganic solid electrolyte may include $Li_3N$, LiI, $Li_5NI_2$, $Li_3N$-LiI-LiOH, $LiSiO_4$, $Li_2SiS_3$, $Li_4SiO_4$, $Li_4SiO_4$-LiI-LiOH, $Li_3PO_4$-$Li_2S$-$SiS_2$, and the like.

The lithium salt may be a material that is readily soluble in the non-aqueous electrolyte, and non-limiting examples thereof may include LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(FSO_2)_2NLi$, $(CF_3SO_2)_2NLi$, $(FSO_2)_2NLi$, lithium chloroborate, or a combination thereof.

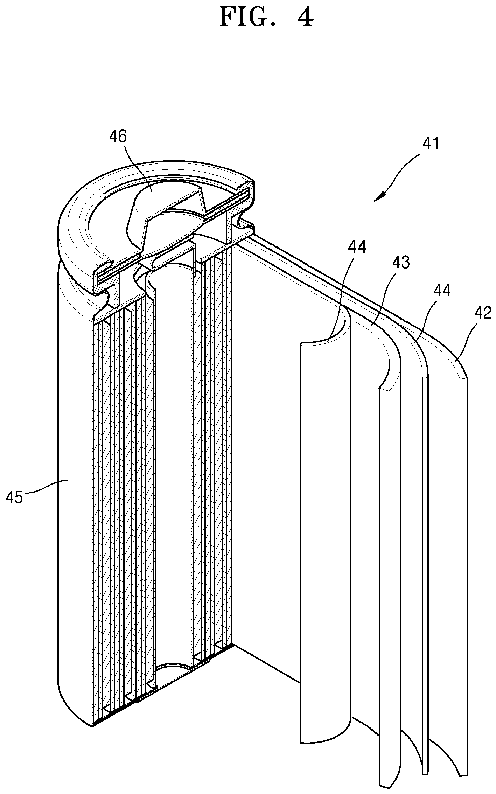

FIG. 4 is a schematic cross-sectional view illustrating a representative structure of a lithium secondary battery 41 according to one embodiment.

Referring to FIG. 4, the lithium secondary battery 41 may include a positive electrode 43, a negative electrode 42, and a separator 44 according to one embodiment. An electrode assembly in which the positive electrode 43, the negative electrode 42, and the separator 44 are wound or folded may be accommodated in a battery case 45. According to a shape of a battery, a separator 44 may be between a positive electrode 43 and a negative electrode 42, and the separator 44, the positive electrode 43, and the negative electrode 42 may be alternately stacked to form a battery structure. Subsequently, an organic electrolyte may be injected into the battery case 45, and the battery case 45 may be sealed with a cap assembly 46 to complete the lithium secondary battery 41. The battery case 45 may be a cylindrical, prismatic, or thin film type (or kind). For example, the lithium secondary battery 41 may be a large-sized thin-film battery. The lithium secondary battery 41 may be a lithium ion battery. The battery structure may be accommodated in a pouch, impregnated in an organic electrolyte, and then sealed, thereby completing a lithium ion polymer battery. In some embodiments, a plurality of battery structures may be stacked to form a battery pack, and such a battery pack may be used in any suitable device utilizing or requiring high capacity and high output. For example, the battery structure may be used in laptops, smart phones, electric vehicles, and/or the like.

In some embodiments, the lithium secondary battery 41 may have excellent storage stability, life characteristics, and high rate characteristics at a high temperature and thus may be used in electric vehicles (EVs). For example, the lithium secondary battery 41 may be used for hybrid vehicles such as plug-in hybrid electric vehicles (PHEVs).

Hereinafter, embodiments of the disclosure will be described in more detail with reference to the following Examples and Comparative Examples. However, the following Examples are merely presented to illustrate embodiments of the disclosure, and the scope of the disclosure is not limited thereto.

**Preparation of nickel-based metal precursor**

**Preparation Example 1**

A nickel-based metal precursor ($Ni_{0.92}Co_{0.06}Mn_{0.02}(OH)_2$) was synthesized through co-precipitation.

Nickel sulfate ($NiSO_4 \cdot 6H_2O$), cobalt sulfate ($CpSO_4 \cdot 7H_2O$), and manganese sulfate ($MnSO_4 \cdot H_2O$) were dissolved in distilled water as a solvent to prepare a metal raw material mixture solution such that a molar ratio of Ni:Co:Mn=92:6:2. Ammonia water ($NH_4OH$) diluted solution and sodium hydroxide (NaOH) as a precipitator were prepared to form a complex compound. Thereafter, a metal raw material mixture solution, ammonia water, and sodium hydroxide were each put into a reactor. Sodium hydroxide was put to maintain a pH inside the reactor.

The pH of the mixture was adjusted to 11.7, and the mixture was stirred for 10 hours. Then, the pH of the mixture was adjusted to 11.5 to reduce the pH to about 0.2 based on the initial pH to thereby change a coprecipitation rate. Thus, a difference was generated in a synthesis rate between the inside and outside of the nickel-based lithium metal oxide precursor, thereby obtaining a nickel-based lithium metal oxide precursor having a pore inside.

After the reaction mixture was stirred to perform a reaction for about 20 hours, the introduction of the metal raw material mixture solution was stopped.

A slurry solution in the reactor was filtered, washed with high-purity distilled water, and then dried in a hot air oven at a temperature of 200 °C for 24 hours to obtain the nickel-based metal precursor ($Ni_{0.92}Co_{0.06}Mn_{0.02}(OH)_2$) having a hollow structure having pores therein. The nickel-based metal precursor includes secondary particles that are aggregates of primary particles, and the secondary particles have an average particle diameter of about 14 $\mu$m.

**Comparative Preparation Example 1**

A nickel-based metal precursor ($Ni_{0.92}Co_{0.06}Mn_{0.02}(OH)_2$) having no hollow structure was obtained in substantially the same manner as in Preparation Example 1, except that the pH of the mixture was maintained at 11.7 without change, instead of adjusting the pH of the mixture to 11.5 to reduce the pH by about 0.2 based on the initial pH, after adjusting the pH of the mixture to 11.7 and stirring for 10 hours.

**Preparation of positive electrode active material for lithium secondary battery**

**Example 1: Co coating (2 mol%) and Mo doping (0.1 mol%)**

A first mixture was obtained by adding the nickel-based metal precursor ($Ni_{0.92}Co_{0.06}Mn_{0.02}(OH)_2$) having a hollow structure of Preparation Example 1 and lithium carbonate. A mixing molar ratio (Li/Me) of lithium and a metal in the first mixture is about 1.04. A content of the metal is the total content of Ni, Co, and Mn. After ammonium heptamolybdate hydrate ($(NH_4)_6Mo_7O_{24} \cdot 4H_2O$) was added to the first mixture, such a mixture was subjected to a primary heat treatment at a temperature of 900 °C for 15 hours in an air atmosphere.

A primary heat treatment product was disintegrated using a roll crusher (interval: 0.1 mm) and then disintegrated through a colloidal mill (interval<100 $\mu$m) to obtain a product having a particle size of 13 $\mu$m to 14 $\mu$m.

The product disintegrated according to such a process was subjected to a secondary heat treatment at a temperature of 770 °C in an oxygen atmosphere, $Co(OH)_2$ as a cobalt precursor was added thereto, and the secondary heat treatment was performed at a temperature of 770 °C for 12 hours in an oxygen atmosphere, thereby preparing a positive electrode active material ($LiNi_{0.899}Co_{0.08}Mn_{0.02}Mo_{0.001}O_2$), which had a hollow structure and included a coating layer containing a cobalt compound, in a secondary particle state. A content of a molybdenum precursor was controlled such that a content of molybdenum in the positive electrode active material was about 0.1 mol% with respect to the total content of 100 mol% of the metal other than lithium. A content of the cobalt precursor was controlled such that a content of the cobalt compound in the coating layer containing the cobalt compound was 2 mol% with respect to the total content of the positive electrode active material.

The positive electrode active material obtained according to Example 1 had $LiNi_{0.899}Co_{0.08}Mn_{0.02}Mo_{0.001}O_2$ as a state of secondary particles. The secondary particles were an aggregate of primary particles, the primary particles had a size (average particle diameter) of about 3.5 $\mu$m, and the secondary particles had an average particle diameter of about 13 $\mu$m and had pores with a size of 3 $\mu$m therein. The content of the cobalt compound is 2 mol% with respect to the total content of the finally obtained positive electrode active material, and the coating layer has a thickness of about 20 nm.

**Example 2: Co coating (2 mol%) and Mo doping (0.2 mol%)**

A positive electrode active material ($LiNi_{0.898}Co_{0.08}Mn_{0.02}Mo_{0.002}O_2$) for a lithium secondary battery was prepared in substantially the same manner as in Example 1, except that a content of molybdenum was controlled to be about 0.2 mol% with respect to the total content of 100 mol% of a metal other than lithium in the positive electrode active material.

**Example 3: Co coating (1 mol%) and Mo doping (0.4 mol%)**

A positive electrode active material ($LiNi_{0.906}Co_{0.07}Mn_{0.02}Mo_{0.004}$) for a lithium secondary battery was prepared in substantially the same manner as in Example 1, except that a content of a cobalt compound in a coating layer containing the cobalt compound was controlled to be 1 mol% with respect to the total content of the positive electrode active material, and a content of molybdenum was controlled to be about 0.4 mol% with respect to the total content of 100 mol% of a metal other than lithium in the positive electrode active material.

**Comparative Example 1**

A first mixture was obtained by adding the nickel-based metal precursor ($Ni_{0.92}Co_{0.06}Mn_{0.02}(OH)_2$) having a hollow structure of Preparation Example 1 and lithium carbonate. A mixing molar ratio Li/Me of lithium and a metal in the first mixture is about 1.04. A content of the metal is the total content of Ni, Co, and Mn. The first mixture was subjected to a primary heat treatment at a temperature of 900 °C for 15 hours in an air atmosphere.

A primary heat treatment product obtained according to such a process was pulverized using a Hosokawa jet mill (Blower 35 Hz, AFG 8000 rpm, and Air 4 kgf/cm$^2$) to prepare a nickel-based lithium metal oxide having a non-hollow structure.

A cobalt precursor ($Co(OH)_2$) was added to the nickel-based lithium metal oxide having a non-hollow structure, and a secondary heat treatment was performed at a temperature of about 770 °C for 12 hours in an oxygen atmosphere to prepare a positive electrode active material (particle size of 3 $\mu$m to 4 $\mu$m) having a non-hollow structure.

**Comparative Example 2**

A nickel-based lithium metal oxide having a non-hollow structure and a positive electrode active material (having a particle size in a range of 3 $\mu$m to 4 $\mu$m) having a non-hollow structure were prepared in substantially the same manner as in Comparative Example 1, except that the secondary heat treatment was not performed.

In the positive electrode active materials prepared according to Comparative Examples 1 and 2, a pulverization process using a jet mill was added as a process, and a nickel-based lithium metal oxide having a non-hollow structure obtained after pulverization had the form of small grains having a size of 3 $\mu$m to 4 $\mu$m. Such small grain particles have poor flow characteristics of powder, and thus manufacturing processability is low in mass production. The positive electrode active materials prepared according to Comparative Examples 1 and 2 had the shape of pulverized primary particles but had many surface defects and an aspect in which shapes of many particles were broken. The above defects are caused in the pulverization process.

Because the positive electrode active material of Example 1 has the size of a large particle, as compared with the positive electrode active material of Comparative Example 2, a specific surface area was small, and the flowability is excellent. Thus, the mass production processability of the positive electrode active material is improved.

**Comparative Example 3 (use of a non-porous nickel-based metal precursor as a starting material)**

A positive electrode active material was prepared in substantially the same manner as in Example 1, except that the nickel-based metal precursor ($Ni_{0.92}Co_{0.06}Mn_{0.02}(OH)_2$) having no hollow structure obtained according to Comparative Preparation Example 1 was used instead of the nickel-based metal precursor having a hollow structure of Preparation Example 1.

When a primary heat treatment was performed according to Comparative Example 3, the positive electrode active material having a shape, in which a hollow structure was not present inside the positive electrode active material and primary particles were dense as compared with Example 1, was prepared.

**Manufacturing Example 1: Manufacturing of coin cell**

A coin cell was manufactured as follows using the positive electrode active material obtained according to Example 1 as a positive electrode active material without a separate pulverization process.

A mixer was used to remove bubbles from a mixture of 96 g of the nickel-based active material ($LiNi_{0.92}Co_{0.06}Mn_{0.02}O_2$) obtained in Example 1, 2 g of PVDF, 47 g of N-methylpyrrolidone as a solvent, and 2 g of carbon black as a conductive material, thereby preparing a uniformly dispersed slurry for forming a positive electrode active material layer.

After the slurry prepared according to such a process was applied on an aluminium foil using a doctor blade to form the aluminium foil in the form of a thin electrode plate, the thin electrode plate was dried at a temperature of 135 °C for 3 hours or more and then subjected to pressing and vacuum drying processes to prepare a positive electrode.

A 2032-type coin cell was manufactured using the positive electrode and a lithium metal counter electrode as a counter electrode. A separator (thickness: about 16 $\mu$m) made of a porous polyethylene (PE) film was interposed between the positive electrode and the lithium metal counter electrode, and an electrolyte was injected to manufacture the 2032-type coin cell. As the electrolyte, a solution, which included 1.1 M $LiPF_6$ dissolved in a solvent in which EC and ethylmethyl carbonate (EMC) were mixed together in a volume ratio of 3:5, was used.

When a coin cell is manufactured according to Manufacturing Example 1, during preparing of a positive electrode, without a pulverization process being performed, agglomerated primary particles may be dispersed during a press process. Thus, productivity may be improved.

**Manufacturing Examples 2 and 3: Manufacturing of coin cell**

Coin cells were manufactured in substantially the same manner as in Manufacturing Example 1, except that each of the positive electrode active materials of Examples 2 and 3 was used instead of the positive electrode active material of Example 1.

**Comparative Manufacturing Examples 1 to 3: Manufacturing of coin cell**

Coin cells were manufactured in substantially the same manner as in Manufacturing Example 1, except that each of the positive electrode active materials obtained in Comparative Examples 1 to 3 was used as a positive electrode active material.

**Evaluation Example 1: SEM**

**(1) Example 1 and Comparative Examples 1 to 3**

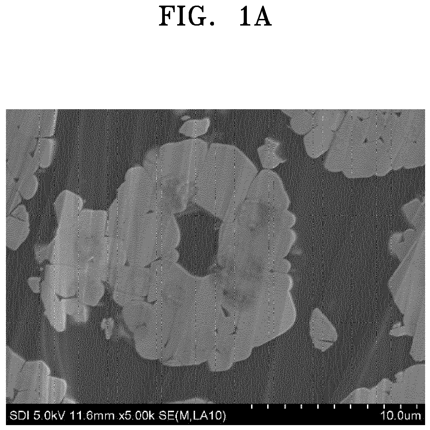

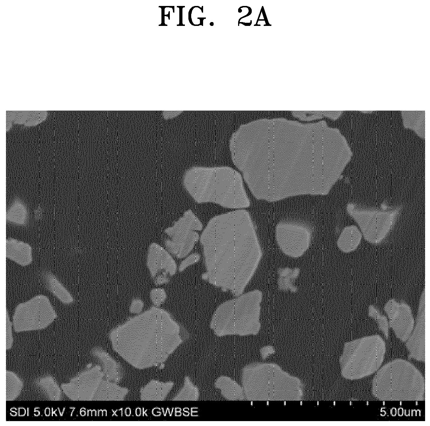

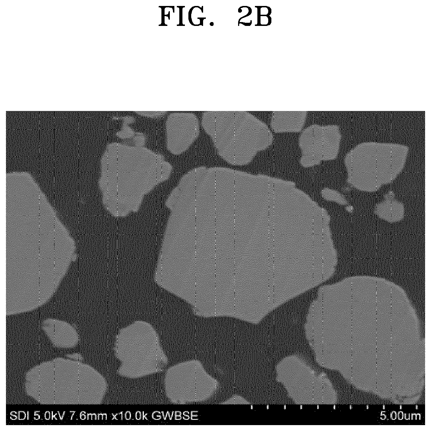

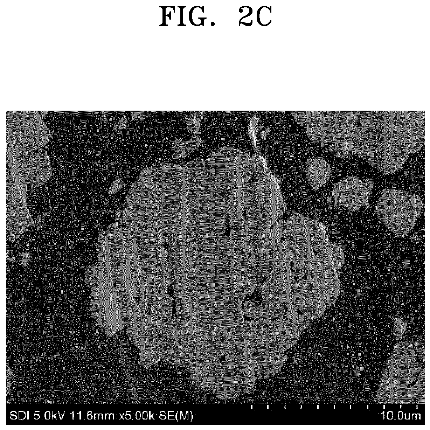

Cross-sections of secondary particles of the positive electrode active materials of Example 1 and Comparative Examples 1 to 3 were analyzed using a SEM. A Magellan 400L (manufactured by FEI company) was used as the SEM. Analysis results are shown in FIGS. 1A and 2A-2C.

FIG. 1A is a SEM image of a cross section of the positive electrode active material of Example 1, and FIGS. 2A-2C are SEM images of cross sections of the positive electrode active materials of Comparative Examples 1 to 3, respectively.

Referring to FIG. 1A, the positive electrode active material of Example 1 had a hollow structure having pores therein and included primary particles having a size of 3.5 $\mu$m and secondary particles having a size of 13 $\mu$m.

As shown in FIGS. 2A-2C, the positive electrode active materials of Comparative Examples 1 to 3 had the form of a small particles (1 $\mu$m to 5 $\mu$m) and had a dense aggregate form having no hollow structure. The positive electrode active material of Example 1 is an aggregate (secondary particles) before the small particle (primary particles) of Comparative Example 2 are pulverized.

**(2) Preparation Example 1**

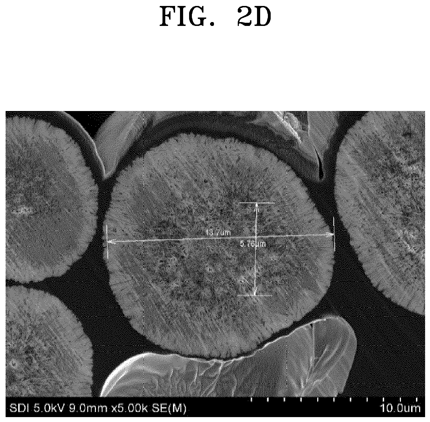

The nickel-based metal precursor of Preparation Example 1 was analyzed using a SEM. Analysis results are shown in FIG. 2D.

Referring to FIG. 2D, the nickel-based metal precursor of Preparation Example 1 had pores therein and included secondary particles having a size of about 14 $\mu$m. The interior in which the pore exists had a major axis length of about 5.76 $\mu$m and an amorphous structure.

**Evaluation Example 2**

An average particle diameter, a Brunauer-Emmett-Teller (BET) specific surface area, and an angle of repose of the positive electrode active materials of Example 1 and Comparative Example 1 were measured and shown in Table 1 below. The average particle diameter was analyzed using a SEM.

The angle of repose was measured using a method of measuring an angle at which powders were stacked. The angle of repose was measured using a PT-D type powder tester (manufactured by Hosokawa Micron Corporation). Specifically, a funnel including a nozzle having an inner diameter of 5 mm was installed using a supporter such that an upper portion of the funnel was positioned at a position of 225 mm and a lower portion of the nozzle was positioned at a position of 135 mm on a horizontal substrate, and a powder collection table was positioned at a position of 75 mm from the lower portion of the nozzle. With care not to give vibration, the positive electrode active material was injected into the funnel so as not to be volatilized, thereby measuring an angle of a corner, which was formed by a horizontal plane and an inclined surface of a conical powder layer formed on a powder collection table. The same experiment was repeated three times, and an average of measured angles was taken as the angle of repose.

Table 1

| Classification | Average particle diameter ($\mu$m) | BET specific surface area (m2/g) | Angle of repose (°) |
|---|---|---|---|
| Example 1 | 13.6 | 0.254 | 25.4 |
| Comparative Example 1 | 3.3 | 0.675 | 43.2 |

As can be seen from Table 1, because the positive electrode active material of Example 1 had a larger average particle diameter, a smaller BET specific surface area, and a smaller angle of repose as compared with the positive electrode active material of Comparative Example 1, it could be seen that the positive electrode active material of Example 1 had better flowability.

**Evaluation Example 3: State analysis after pressing during preparing of positive electrode**

In order to compare particle sizes and the presence or absence of pores after pressing in positive electrodes of Manufacturing Example 1 and Comparative Manufacturing Example 1, SEM analysis for the positive electrodes of Manufacturing Example 1 and Comparative Manufacturing Example 1 was performed.

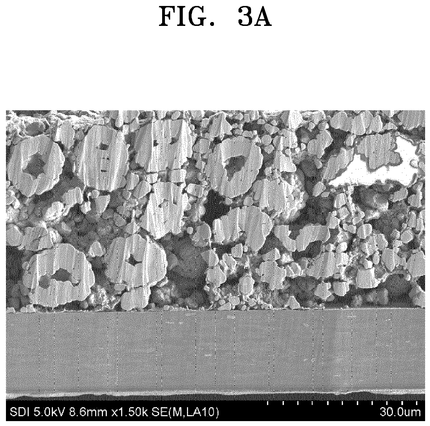

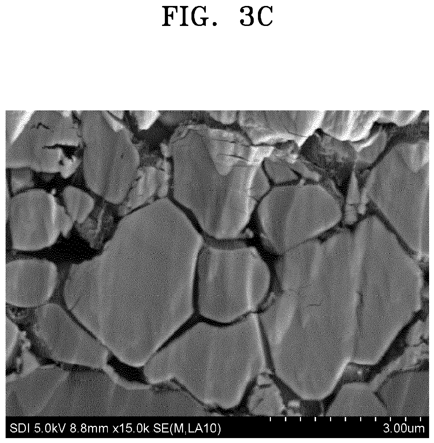

SEM analysis results are shown in FIGS. 3A-3C. FIGS. 3A-3B respectively show states before and after pressing during preparing of the positive electrode of Manufacturing Example 1. FIG. 3C shows a state after pressing during preparing of the positive electrode prepared according to Comparative Manufacturing Example 1.

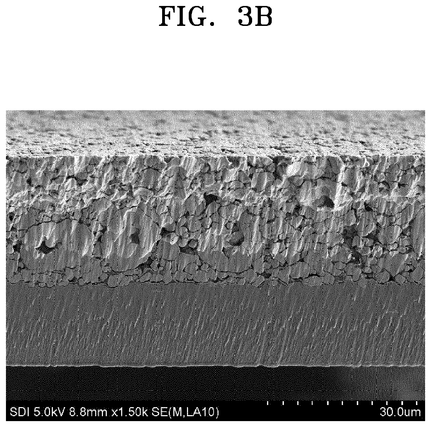

In the positive electrode of Manufacturing Example 1, after pressing, the positive electrode active material having pores is disintegrated and dispersed through pressing. As a result, as shown in FIG. 3B, the positive electrode has a two-layer structure, and a positive electrode active material layer includes secondary particles of a nickel-based metal oxide which are a positive electrode active material and include a plurality of single crystal primary particles.

The positive electrode of Manufacturing Example 1 includes a mixture of primary particles A and secondary particles B which are aggregates of the primary particles. It was confirmed that pores were present in the positive electrode active material layer. The primary particles A were a plurality of single crystal primary particles, and the secondary particles B were in a state in which some of large crystal secondary particles of a nickel-based lithium metal oxide were crushed or broken during pressing of the positive electrode.

It could be confirmed that a surface portion of the positive electrode active material layer was more pressed than a central portion adjacent to a positive electrode current collector so that particles had a broken state.

**Evaluation Example 4: X-ray diffraction analysis**

The positive electrode active material prepared according to Example 1 and the positive electrode active materials prepared according to Comparative Examples 1 and 2 were subjected to X-ray diffraction analysis through a diffractometer (X'pert pro manufactured by Malvern Panalytical) using Cu-K$\alpha$ radiation (1.54056 Å). Results thereof are shown in Table 2 below.

In Table 2 below, $I_{(003)}$ denotes peak intensity (2$\theta$ of about 18° to about 19°) corresponding to a (003) plane, and $I_{(104)}$ denotes peak intensity (2$\theta$ of about 44.5°) corresponding to a (104) plane. $FWHM_{(003)}$ denotes an FWHM of a peak corresponding to a (003) plane, and $FWHM_{(104)}$ denotes an FWHM of a peak corresponding to a (104) plane. In Table 2 below, $A_{(003)}$ denotes an area of the peak corresponding to the (003) plane, and $A_{(104)}$ denotes an area of the peak corresponding to the (104) plane.

Table 2

| Classification | $FWHM_{(003)}$(°) | $FWHM_{(003)}/FWHM_{(104)}$ | $I_{(003)}/I_{(104)}$ | $A_{(003)}/A_{(104)}$ |
|---|---|---|---|---|
| Example 1 | 0.0809 | 0.86 | 1.74 | 1.33 |
| Comparative Example 1 | 0.0818 | 0.73 | 1.66 | 1.21 |
| Comparative Example 2 | 0.0805 | 0.79 | 1.65 | 1.23 |

As can be seen from Table 2, it could be seen from values of $FWHM_{(003)}$ and $FWHM_{(003)}/FWHM_{(104)}$ of Table 2 that the positive electrode active material of Example 1 included large crystal secondary particles. It could be seen that the positive electrode active material of Example 1 had excellent crystal characteristics as compared with Comparative Examples 1 and 2 because a pulverization process was not performed and the positive electrode active material had less crystal damage.

It can be confirmed from values of the above-described $FWHM_{(003)}$ and $FWHM_{(003)}/FWHM_{(104)}$ that the positive electrode active material has less crystal damage. The lower the $FWHM_{(003)}$, the larger and more uniform the grains of the active material grew in the (003) direction. The higher the ratio of $FWHM_{(003)}/FWHM_{(104)}$, the larger and more uniform the crystal structure grew in the (104) direction.

As can be seen from Table 2, the positive electrode active material of Example 1 exhibited similar single crystal characteristics to that of Comparative Example 2. When the positive electrode active material of Example 1 was used, a cation mixing ratio was reduced as compared with using the positive electrode active materials of Comparative Examples 1 and 2, thereby enabling large capacity.

**Evaluation Example 5: Charge/discharge characteristics**

In the coin cells manufactured according to Manufacturing Example 1, Comparative Manufacturing Example 1, and Comparative Manufacturing Example 2, charge/discharge characteristics and the like were evaluated using a charging/discharging apparatus (Model: TOYO-3100 manufactured by TOYO Corporation).

In first charging/discharging, constant current charging was performed with a current of 0.1 C at a temperature of 25 °C until a voltage reached a 4.2 V, and then constant voltage charging was performed until a current reached 0.05 C. Charged cells were rested for about 10 minutes and then were discharged at a constant current of 0.1 C until the voltage reached 3 V. In a second charging/discharging cycle, constant current charging was performed with a current of 0.2 C until a voltage reached 4.2 V, and then constant voltage charging was performed until a current reached 0.05 C. Charged cells were rested for about 10 minutes and then were discharged at a constant current of 0.2 C until the voltage reached 3 V.

For lifetime evaluation, constant current charging was performed at a current of 1 C until a voltage reached 4.2 V, and then constant voltage charging was performed until a current reached 0.05 C. Charged cells were rested for about 10 minutes and then were discharged at a constant current of 1 C until the voltage reached 3 V, and such a cycle was repeated 50 times for evaluation.

A capacity retention ratio (CRR) was calculated from Equation 1 below, and charge/discharge efficiency was calculated from Equation 2.

Equation 1

$$CRR\ [\%] = [\text{discharge capacity of } 50^{th} \text{ cycle/discharge capacity of } 1^{st} \text{ cycle}] \times 100$$

Equation 2

$$\text{charge/discharge efficiency} = [\text{discharge voltage of } 1^{st} \text{ cycle/charge voltage of } 1^{st} \text{ cycle}]$$
$$\times 100$$

The above-described CRR, and charge/discharge efficiency were evaluated and shown in Table 3 below.

Table 3

| Classification | Charge/dischar ge efficiency (%) | CRR (%) |
| --- | --- | --- |
| Manufacturing Example 1 | 88 | 95 |
| Comparative Manufacturing Example 1 | 89 | 95 |
| Comparative Manufacturing Example 2 | 89 | 94 |

Referring to Table 3, the charge/discharge efficiency and CRR of the coin cell manufactured according to Manufacturing Example 1 are almost the same levels as those of the coin cells of Comparative Manufacturing Examples 1 and 2, but as shown in Table 2 above, the processability (flowability) of particles is considerably improved as compared with the coin cells of Comparative Manufacturing Examples 1 and 2 in which pulverization has been performed so that the coin cell manufactured according to Manufacturing Example 1 is easy to mass-produce.

**Evaluation Example 6: Energy dispersive spectroscopy (EDS) analysis**

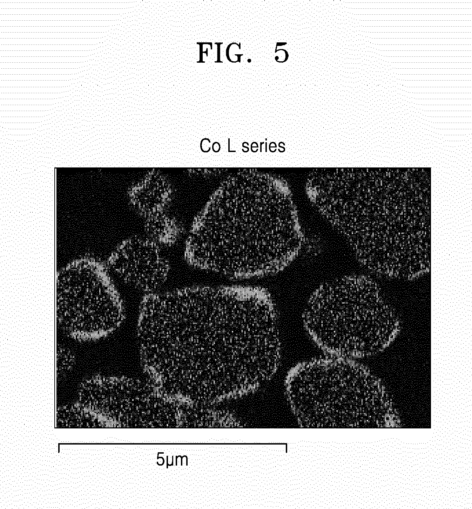

A concentration distribution of cobalt ions inside the positive electrode active materials of Example 1 and Comparative Example 1 was measured through EDS. Results thereof are shown in FIGS. 5-6, respectively.

As shown in FIG. 5, it could be seen that cobalt was present in a higher concentration on a surface of the positive electrode active material of Example 1.

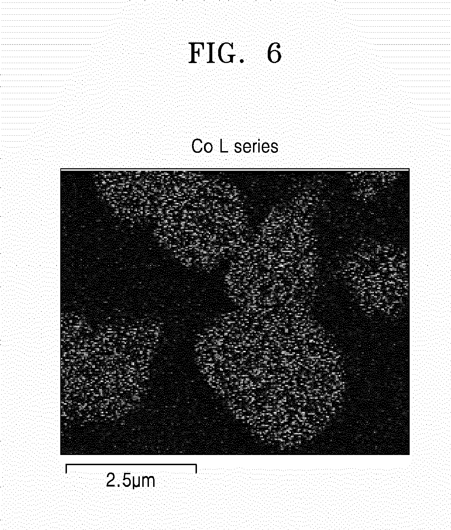

As shown in FIG. 6, cobalt was uniformly distributed in the entirety of the positive electrode active material of Comparative Example 1. In Comparative Example 1, because cobalt is applied on surfaces of particles having a size of about 3 $\mu$m to about 4 $\mu$m after pulverization, cobalt easily penetrates from a surface to the inside and thus is uniformly distributed in the entirety.

In Example 1, the positive electrode active material has a particle size of 13 $\mu$m, and thus cobalt is present in a higher concentration on the surface as compared with Comparative Example 1.

While one or more embodiments have been described with reference to the drawings and Examples, the description merely illustrates non-limiting examples, and it will be understood by those of ordinary skill in the art that various suitable modifications and other equivalent embodiments are possible therefrom. Therefore, the protection scope of the present disclosure should be defined by the appended claims, and equivalents thereof.

If a positive electrode active material for a lithium secondary battery according to one aspect of embodiments is used, aggregation between particles may be suppressed or reduced, productivity may be improved, and a cation mixing ratio may be reduced, thereby preparing a positive electrode active material for a lithium secondary battery in which high capacity is enabled. A lithium secondary battery manufactured using such a nickel-based active material for a lithium secondary battery may have improved charge/discharge efficiency.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various suitable changes in form and details may be made therein without departing from the scope of the disclosure as defined by the following claims, and equivalents thereof.

The present invention can also be defined by reference to the following clauses:

Clause 1. A positive electrode active material for a lithium secondary battery, comprising:

   large crystal secondary particles of a nickel-based lithium metal oxide which comprise a plurality of primary particles,
   wherein the large crystal secondary particles have a hollow structure having pores therein,
   the primary particles have a size of about 1 $\mu$m to about 4 $\mu$m,
   the large crystal secondary particles have a size of about 10 $\mu$m to about 18 $\mu$m,
   the positive electrode active material comprises a coating layer containing a cobalt compound which is on surfaces of the large crystal secondary particles of the nickel-based lithium metal oxide, and
   the large crystal secondary particles of the nickel-based lithium metal oxide are doped with molybdenum.

Clause 2. The positive electrode active material as defined in clause 1, wherein a content of molybdenum is in a range of about 0.1 mol% to about 1.0 mol% with respect to a total content of 100 mol% of metals other than lithium in the positive electrode active material.

Clause 3. The positive electrode active material as defined in clause 1 or clause 2, wherein at least one selected from surfaces and grain boundaries of the plurality of primary particles comprises the coating layer containing the cobalt compound.

Clause 4. The positive electrode active material as defined in any one of clauses 1 to 3, wherein a content of the cobalt compound in the coating layer containing the cobalt compound is in a range of about 0.1 mol% to about 5.0 mol% with respect to a total content of the positive electrode active material.

Clause 5. The positive electrode active material as defined in any one of clauses 1 to 4, wherein the coating layer containing the cobalt compound has a thickness of about 1 nm to about 50 nm.

Clause 6. The positive electrode active material as defined in any one of clauses 1 to 5, wherein, in the coating layer containing the cobalt compound, the cobalt compound comprises cobalt oxide, lithium cobalt oxide, or a combination thereof.

Clause 7. The positive electrode active layer as defined in clause 6, wherein the coating layer containing the cobalt compound further comprises at least one selected from boron, manganese, phosphorus, aluminium, zinc, zirconium, and titanium.

Clause 8. The positive electrode active material as defined in any one of clauses 1 to 7, wherein the pores inside the positive electrode material have a size of about 2 $\mu$m to about 7 $\mu$m.

Clause 9. The positive electrode active material as defined in any one of clauses 1 to 8, wherein the nickel-based lithium metal oxide is a compound represented by Formula 1 below:

$$\text{Formula 1} \qquad \text{Li}_a(\text{Ni}_{1-x-y}\text{M1}_x\text{M2}_y)\text{O}_{2\pm\alpha1}$$

wherein, in Formula 1, M1 is at least one element selected from Co, Mn, and Al,
M2 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr),
$0.95 \leq a \leq 1.1$, $0.6 \leq (1-x-y) < 1$, $0 \leq x < 0.4$, $0 \leq y < 0.4$, and $0 \leq \alpha_1 \leq 0.1$, with the proviso that x and y are not both 0.

Clause 10. The positive electrode active material as defined in any one of clauses 1 to 8, wherein the nickel-based lithium metal oxide is a compound represented by Formula 2 below:

$$\text{Formula 2} \qquad \text{Li}_a(\text{Ni}_{1-x-y-z}\text{Co}_x\text{M3}_y\text{M4}_z)\text{O}_{2\pm\alpha1}$$

wherein, in Formula 2, M3 is at least one element selected from Mn and Al,
M4 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr),
$0.95 \leq a \leq 1.1$, $0.6 \leq (1-x-y-z) < 1$, $0 \leq x < 0.4$, and $0 \leq y < 0.4$, $0 \leq \alpha \leq 0.1$, with the proviso that x, y, and z are not all 0.

Clause 11. The positive electrode active material as defined in any one of clauses 1 to 10, wherein the primary particles have a size of about 2 $\mu$m to about 4 $\mu$m, and the secondary particles have a size of about 12 $\mu$m to about 18 $\mu$m.

Clause 12. The positive electrode active material as defined in any one of clauses 1 to 11, wherein a peak intensity ratio ($I_{(003)}/I_{(104)}$) of the positive electrode active material measured through X-ray diffraction analysis is in a range of about 1.2 to about 4.0, and an area ratio ($A_{(003)}/A_{(104)}$) is in a range of about 1.1 to about 1.4.

Clause 13. The positive electrode active material as defined in any one of clauses 1 to 12, wherein the large crystal secondary particles comprise one or two single crystal primary particle layers.

Clause 14. A method of preparing a positive electrode active material for a lithium secondary battery, the method comprising:

mixing together a nickel precursor, at least one metal precursor selected from a precursor (M1) and a precursor (M2), and a basic solution, to obtain a mixture, performing a co-precipitation reaction of the mixture, and then drying the mixture to obtain a nickel-based metal precursor having pores therein;
obtaining a mixture of the nickel-based metal precursor having pores therein and a lithium precursor;
adding a molybdenum precursor to the mixture of the nickel-based metal precursor having pores therein and the lithium precursor and performing a primary heat treatment on the mixture;
performing a disintegration process on a product subjected to the primary heat treatment, to obtain a product in a hollow secondary particle state; and
adding a cobalt precursor to the product in the hollow secondary particle state to obtain a mixture and performing a secondary heat treatment on the mixture to prepare the positive electrode active material as defined in any one of clauses 1 to 13,
wherein the primary heat treatment is performed at a higher temperature than the secondary heat treatment, the precursor (M1) is at least one selected from a cobalt precursor, a manganese precursor, and an aluminium precursor, and
the precursor (M2) is a precursor comprising at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr).

Clause 15. The method as defined in clause 14, wherein a pore region inside the nickel-based metal precursor has a size of about 2 $\mu$m to about 7 $\mu$m.

Clause 16. The method as defined in clause 14 or clause 15, wherein the cobalt precursor comprises $Co(OH)_2$, $CoOOH$, $CoO$, $Co_2O_3$, $Co_3O_4$, $C_o(OCOCH_3)_2 \cdot 4H_2O$, $CoCl_2$, $Co(NO_3)_2 \cdot 6H_2O$, $CoSO_4$, $Co(SO_4)_2 \cdot 7H_2O$, or combination thereof.

Clause 17. The method as defined in any one of clauses 14 to 16, wherein the nickel-based metal precursor is a compound represented by Formula 3 below, a compound represented by Formula 4 below, or a combination thereof:

$$\text{Formula 3} \qquad (Ni_{1-x-y}M1_xM2_y)(OH)_2$$

wherein, in Formula 3, M1 is at least one element selected from Co, Mn, and Al,
M2 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr),
$0.6 \leq (1-x-y) < 1$, $0 \leq x < 0.4$, and $0 \leq y < 0.4$, with the proviso that x and y are not both 0, and

$$\text{Formula 4} \qquad (Ni_{1-x-y}M1_xM2_y)O$$

wherein, in Formula 4, M1 is at least one element selected from Co, Mn, and Al,
M2 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr),
$0.6 \leq (1-x-y) < 1$, $0 \leq x < 0.4$, and $0 \leq y < 0.4$, with the proviso that x and y are not both 0.

Clause 18. The method as defined in any one of clauses 14 to 16, wherein the nickel-based metal precursor is represented by a compound of Formula 5, a compound of Formula 6, or a combination thereof:

$$Ni_{1-x-y-z}Co_xM3_yM4_z(OH)_2$$

wherein, in Formula 5, M3 is at least one element selected from Mn and Al,
M4 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr),
$0.6 \leq (1-x-y) < 1$, $0 \leq x < 0.4$, $0 \leq y < 0.4$, and $0 \leq z < 0.4$, with the proviso that x, y, and z are not all 0, and

$$\text{Formula 6} \qquad (Ni_{1-x-y-z}Co_xM3_yM4_z)O$$

wherein, in Formula 6, M3 is at least one element selected from Mn and Al,
M4 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr),
$0.6 \leq (1-x-y) < 1$, $0 \leq x < 0.4$, $0 \leq y < 0.4$, and $0 \leq z < 0.4$, with the proviso that x, y, and z are not all 0.

Clause 19. The method as defined in any one of clauses 14 to 18, wherein the nickel-based metal precursor and the lithium precursor are mixed together such that a molar ratio (Li/Me, Me being a metal other than Li) is about 0.9 or more but less than 1.1.

Clause 20. The method as defined in any one of clauses 14 to 19, wherein the lithium precursor comprises lithium hydroxide, lithium carbonate, lithium sulfate, lithium nitrate, or a combination thereof.

Clause 21. The method as defined in any one of clauses 14 to 20, wherein the primary heat treatment is performed at a temperature of about 800 °C to about 1,200 °C in an oxidizing gas atmosphere.

Clause 22. The method as defined in any one of clauses 14 to 21, wherein the secondary heat treatment is performed at a temperature of about 600 °C to about 850 °C in an oxidizing gas atmosphere.

Clause 23. A positive electrode for a lithium secondary battery, comprising:

a positive electrode current collector; and a positive electrode active material layer on the positive electrode current collector,

wherein the positive electrode active material layer comprises the positive electrode active material as defined in any one of clauses 1 to 13 and at least one selected from single particles having a same composition as the positive electrode active material, and aggregates thereof.

Clause 24. The positive electrode as defined in clause 23, wherein a surface portion of the positive electrode comprises the single crystal single particle in a greater amount than in a center portion adjacent to the positive electrode current collector.

Clause 25. The positive electrode as defined in clause 23 or clause 24, wherein the positive electrode comprises the positive electrode active material layer, and the positive electrode active material layer comprises a center portion adjacent to the positive electrode current collector comprising a greater amount of the positive active material, which has a hollow structure, than in a surface portion.

Clause 26. The positive electrode as defined in any one of clauses 23 to 25, comprising one or two positive electrode active material layers.

Clause 27. A lithium secondary battery comprising:

the positive electrode as defined in any one of clauses 23 to 26;
a negative electrode; and

an electrolyte interposed therebetween.

**Claims**

1. A positive electrode active material for a lithium secondary battery, comprising:

large crystal secondary particles of a nickel-based lithium metal oxide which comprise a plurality of primary particles,
wherein the large crystal secondary particles have a hollow structure having pores therein,
the primary particles have a size of about 1 $\mu$m to about 4 $\mu$m,
the large crystal secondary particles have a size of about 10 $\mu$m to about 18 $\mu$m,
the positive electrode active material comprises a coating layer containing a cobalt compound which is on surfaces of the large crystal secondary particles of the nickel-based lithium metal oxide, and
the large crystal secondary particles of the nickel-based lithium metal oxide are doped with molybdenum.

2. The positive electrode active material as claimed in claim 1, wherein a content of molybdenum is in a range of about 0.1 mol% to about 1.0 mol% with respect to a total content of 100 mol% of metals other than lithium in the positive electrode active material.

3. The positive electrode active material as claimed in claim 1 or claim 2, wherein:

(i) at least one selected from surfaces and grain boundaries of the plurality of primary particles comprises the coating layer containing the cobalt compound; and/or
(ii) a content of the cobalt compound in the coating layer containing the cobalt compound is in a range of about 0.1 mol% to about 5.0 mol% with respect to a total content of the positive electrode active material.

4. The positive electrode active material as claimed in any one of claims 1 to 3, wherein:

(i) the coating layer containing the cobalt compound has a thickness of about 1 nm to about 50 nm; and/or
(ii) in the coating layer containing the cobalt compound, the cobalt compound comprises cobalt oxide, lithium cobalt oxide, or a combination thereof, optionally wherein the coating layer containing the cobalt compound further comprises at least one selected from boron, manganese, phosphorus, aluminium, zinc, zirconium, and titanium.

5. The positive electrode active material as claimed in any one of claims 1 to 4, wherein the pores inside the positive electrode material have a size of about 2 $\mu$m to about 7 $\mu$m.

6. The positive electrode active material as claimed in any one of claims 1 to 5, wherein the nickel-based lithium metal oxide is a compound represented by Formula 1 below:

Formula 1 $\qquad$ $Li_a(Ni_{1-x-y}M1_xM2_y)O_{2\pm\alpha1}$

wherein, in Formula 1, M1 is at least one element selected from Co, Mn, and Al,
M2 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr),
$0.95 \le a \le 1.1$, $0.6 \le (1-x-y) < 1$, $0 \le x < 0.4$, $0 \le y < 0.4$, and $0 \le \alpha_1 \le 0.1$, with the proviso that x and y are not both 0.

7. The positive electrode active material as claimed in any one of claims 1 to 5, wherein the nickel-based lithium metal oxide is a compound represented by Formula 2 below:

Formula 2 $\qquad$ $Li_a(Ni_{1-x-y-z}Co_xM3_yM4_z)O_{2\pm\alpha1}$

wherein, in Formula 2, M3 is at least one element selected from Mn and Al,
M4 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr),
$0.95 \le a \le 1.1$, $0.6 \le (1-x-y-z) < 1$, $0 \le x < 0.4$, and $0 \le y < 0.4$, $0 \le \alpha_1 \le 0.1$, with the proviso that x, y, and z are not all 0.

8. The positive electrode active material as claimed in any one of claims 1 to 7, wherein:

(i) the primary particles have a size of about 2 $\mu$m to about 4 $\mu$m, and the secondary particles have a size of about 12 $\mu$m to about 18 $\mu$m; and/or
(ii) a peak intensity ratio ($I_{(003)}/I_{(104)}$) of the positive electrode active material measured through X-ray diffraction analysis is in a range of about 1.2 to about 4.0, and an area ratio ($A_{(003)}/A_{(104)}$) is in a range of about 1.1 to about 1.4; and/or
(iii) the large crystal secondary particles comprise one or two single crystal primary particle layers.

9. A method of preparing a positive electrode active material for a lithium secondary battery, the method comprising:

mixing together a nickel precursor, at least one metal precursor selected from a precursor (M1) and a precursor (M2), and a basic solution, to obtain a mixture, performing a co-precipitation reaction of the mixture, and then drying the mixture to obtain a nickel-based metal precursor having pores therein;
obtaining a mixture of the nickel-based metal precursor having pores therein and a lithium precursor;
adding a molybdenum precursor to the mixture of the nickel-based metal precursor having pores therein and the lithium precursor and performing a primary heat treatment on the mixture;
performing a disintegration process on a product subjected to the primary heat treatment, to obtain a product in a hollow secondary particle state; and
adding a cobalt precursor to the product in the hollow secondary particle state to obtain a mixture and performing a secondary heat treatment on the mixture to prepare the positive electrode active material as claimed in any one of claims 1 to 8,
wherein the primary heat treatment is performed at a higher temperature than the secondary heat treatment,
the precursor (M1) is at least one selected from a cobalt precursor, a manganese precursor, and an aluminium precursor, and
the precursor (M2) is a precursor comprising at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr).

10. The method as claimed in claim 9, wherein:

(i) a pore region inside the nickel-based metal precursor has a size of about 2 $\mu$m to about 7 $\mu$m; and/or
(ii) the cobalt precursor comprises $Co(OH)_2$, $CoOOH$, $CoO$, $Co_2O_3$, $Co_3O_4$, $C_O(OCOCH_3)_2\cdot4H_2O$, $CoCl_2$,

$Co(NO_3)_2 \cdot 6H_2O$, $CoSO_4$, $C_O(SO_4)_2 \cdot 7H_2O$, or combination thereof.

11. The method as claimed in claim 9 or claim 10, wherein the nickel-based metal precursor is a compound represented by Formula 3 below, a compound represented by Formula 4 below, or a combination thereof, and preferably, the nickel-based metal precursor is a compound represented by Formula 5 below, a compound represented by Formula 6 below, or a combination thereof:

$$\text{Formula 3} \qquad (Ni_{1-x-y}M1_xM2_y)(OH)_2$$

wherein, in Formula 3, M1 is at least one element selected from Co, Mn, and Al,
M2 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr),
$0.6 \leq (1-x-y) < 1$, $0 \leq x < 0.4$, and $0 \leq y < 0.4$, with the proviso that x and y are not both 0, and

$$\text{Formula 4} \qquad (Ni_{1-x-y}M1_xM2_y)O$$

wherein, in Formula 4, M1 is at least one element selected from Co, Mn, and Al,
M2 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr),
$0.6 \leq (1-x-y) < 1$, $0 \leq x < 0.4$, and $0 \leq y < 0.4$, with the proviso that x and y are not both 0,

$$\text{Formula 5} \qquad Ni_{1-x-y-z}Co_xM3_yM4_z(OH)_2$$

wherein, in Formula 5, M3 is at least one element selected from Mn and Al,
M4 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr),
$0.6 \leq (1-x-y-z) < 1$, $0 \leq x < 0.4$, $0 \leq y < 0.4$, and $0 \leq z < 0.4$, with the proviso that x, y, and z are not all 0, and

$$\text{Formula 6} \qquad (Ni_{1-x-y-z}Co_xM3_yM4_z)O$$

wherein, in Formula 6, M3 is at least one element selected from Mn and Al,
M4 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr),
$0.6 \leq (1-x-y-z) < 1$, $0 \leq x < 0.4$, $0 \leq y < 0.4$, and $0 \leq z < 0.4$, with the proviso that x, y, and z are not all 0.

12. The method as claimed in any one of claims 9 to 11, wherein:

(i) the nickel-based metal precursor and the lithium precursor are mixed together such that a molar ratio (Li/Me, Me being a metal other than Li) is about 0.9 or more but less than 1.1; and/or
(ii) the lithium precursor comprises lithium hydroxide, lithium carbonate, lithium sulfate, lithium nitrate, or a combination thereof; and/or
(iii) the primary heat treatment is performed at a temperature of about 800 °C to about 1,200 °C in an oxidizing gas atmosphere; and/or
(iv) the secondary heat treatment is performed at a temperature of about 600 °C to about 850 °C in an oxidizing gas atmosphere.

13. A positive electrode for a lithium secondary battery, comprising:

a positive electrode current collector; and a positive electrode active material layer on the positive electrode current collector,
wherein the positive electrode active material layer comprises the positive electrode active material as claimed in any one of claims 1 to 8 and at least one selected from single particles having a same composition as the positive electrode active material, and aggregates thereof.

14. The positive electrode as claimed in claim 13, wherein:

(i) a surface portion of the positive electrode comprises the single crystal single particle in a greater amount than in a center portion adjacent to the positive electrode current collector; and/or

(ii) the positive electrode comprises the positive electrode active material layer, and the positive electrode active material layer comprises a center portion adjacent to the positive electrode current collector comprising a greater amount of the positive active material, which has a hollow structure, than in a surface portion; and/or
(iii) the positive electrode comprises one or two positive electrode active material layers.

15. A lithium secondary battery comprising:

the positive electrode as claimed in claim 13 or claim 14;
a negative electrode; and
an electrolyte interposed therebetween.

FIG. 1A

SDI 5.0kV 11.6mm x5.00k SE(M,LA10)    10.0um

FIG. 1B

FIG. 1C

FIG. 2A

SDI 5.0kV 7.6mm x10.0k GWBSE                    5.00um

FIG. 2B

FIG. 2C

SDI 5.0kV 11.6mm x5.00k SE(M)                                     10.0um

# FIG. 2D

FIG. 3A

# FIG. 3B

FIG. 3C

SDI 5.0kV 8.8mm x15.0k SE(M,LA10)　　　　　3.00um

FIG. 4

# FIG. 5

Co L series

5μm

# FIG. 6

Co L series

2.5μm

Europäisches
Patentamt

European
Patent Office

Office européen
des brevets

**EUROPEAN SEARCH REPORT**

Application Number

EP 24 15 4127

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 283 770 B2 (SAMSUNG SDI CO LTD [KR] ET AL.) 7 May 2019 (2019-05-07) * column 2 - columns 8,19; claims; examples * ----- | 1-15 | INV. C01G53/00 H01M4/00 |
| X | SATTAR TAHIR ET AL: "Influence of Mo addition on the structural and electrochemical performance of Ni-rich cathode material for lithium-ion batteries", SCIENTIFIC REPORTS, vol. 10, no. 1, 1 January 2020 (2020-01-01), XP093177900, US ISSN: 2045-2322, DOI: 10.1038/s41598-020-64546-8 Retrieved from the Internet: URL:https://www.nature.com/articles/s41598-020-64546-8.pdf> * page 1 - page 8; figures * ----- -/-- | 1-15 | |

TECHNICAL FIELDS
SEARCHED (IPC)

C01G
H01M

The present search report has been drawn up for all claims

| Place of search | Date of completion of the search | Examiner |
|---|---|---|
| Munich | 25 June 2024 | Doslik, Natasa |

EPO FORM 1503 03.82 (P04C01)

Europäisches
Patentamt

European
Patent Office

Office européen
des brevets

# EUROPEAN SEARCH REPORT

**Application Number**

EP 24 15 4127

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WEI JIAN ET AL: "Enhanced electrochemical performance of cobalt oxide layers coated $LiNi_{0.8}Co_{0.1}Mn_{0.1}O_2$ by polyvinylpyrrolidone-assisted method cathode for Li-ion batteries", JOURNAL OF COLLOID AND INTERFACE SCIENCE, vol. 616, 1 June 2022 (2022-06-01), pages 520-531, XP093129546, US ISSN: 0021-9797, DOI: 10.1016/j.jcis.2022.02.095 Retrieved from the Internet: URL:https://pdf.sciencedirectassets.com/27 2564/1-s2.0-S0021979722X00052/1-s2.0-S0021 979722003204/main.pdf?X-Amz-Security-Token =IQoJb3JpZ2luX2VjEDoaCXVzLWVhc3QtMSJGMEQCI EYKtOcCQ/xt1zYfteVcOLoKUXPQ7xpJLxmNERad00B VAiAUr6TkqeLOBvKLvfbveDG3ZuVp1ectKbHXcQO1y 5fUsyqyBQgSEAUaDDA1OTAwMzU0Njg2NSIM4WHEcIM ZCB0HVRu2K> * the whole document * | 1-15 | |

- - - - -

TECHNICAL FIELDS
SEARCHED     (IPC)

The present search report has been drawn up for all claims

| Place of search | Date of completion of the search | Examiner |
|---|---|---|
| Munich | 25 June 2024 | Doslik, Natasa |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 15 4127

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2024

| Patent document cited in search report | | Publication date | Patent family member(s) | | Publication date |
|---|---|---|---|---|---|
| US 10283770 | B2 | 07-05-2019 | KR 20160074236 A | | 28-06-2016 |
| | | | US 2016181611 A1 | | 23-06-2016 |

EPO FORM P0459

For more details about this annex : see Official Journal of the European Patent Office, No. 12/82